(19) **Europäisches Patentamt / European Patent Office / Office européen des brevets**

(11) **EP 1 898 545 A1**

(12) **EUROPEAN PATENT APPLICATION**
published in accordance with Art. 153(4) EPC

(43) Date of publication:
**12.03.2008 Bulletin 2008/11**

(21) Application number: **06767533.0**

(22) Date of filing: **28.06.2006**

(51) Int Cl.:
**H04J 15/00** (2006.01)   **H04B 7/06** (2006.01)
**H04B 7/26** (2006.01)

(86) International application number:
**PCT/JP2006/312916**

(87) International publication number:
**WO 2007/004490 (11.01.2007 Gazette 2007/02)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.06.2005 JP 2005191481**

(71) Applicant: **MATSUSHITA ELECTRIC INDUSTRIAL CO., LTD.**
**Osaka 571-8501 (JP)**

(72) Inventors:
• **IMAI, Tomohiro**
**c/o Matsushita El.Ind.Co.Ltd.**
**Chuo-ku, Osaka 540-6207 (JP)**

• **YUDA, Yasuaki**
**c/o Matsushita El.Ind.Co.Ltd.**
**Chuo-ku, Osaka 540-6207 (JP)**
• **HOSHINO, Masayuki**
**c/o Matsushita El.Ind.Co.Ltd.**
**Chuo-ku, Osaka 540-6207 (JP)**
• **KIMURA, Ryohei**
**c/o Matsushita El.Ind.Co.Ltd.**
**Chuo-ku, Osaka 540-6207 (JP)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **TRANSMITTER, RECEIVER, AND COMMUNICATION METHOD**

(57) A transmitter, a receiver and a communication method enabling improvement of the data rate of an MIMO system.

One signal $x_2$ out of the three signals is combined with the other two signals $x_1$, $x_3$ respectively to generate two combined signals $x_1+x_2$, $x_2+x_3$. The combined signals are transmitted through transmission antennas (102, 103). A signal separating section (106) of the receiver separates the received signals $r_1$, $r_2$ into two signals $y_1$, $y_2$ by a signal separation processing such as the ZF. An MLD processing section (107) generates MLD evaluation formulae using $y_1$, $y_2$ and performs an MLD processing in which $x_2$ is cancelled from $y_1$, $y_2$ and evaluation formulae about $x_1$, $x_3$ are generated, and a maximum likelihood estimation is performed. As a result of the MLD processing, $x_1$, $x_3$ are detected. In a canceling section (108) the detected $x_1$, $x_3$ are canceled from $y_1$, $y_2$, and $x_2$ is detected.

FIG.2

**Description**

Technical Field

The present invention relates to a transmitting apparatus, receiving apparatus and communication method used in a wireless communication system utilizing a MIMO (Multiple Input Multiple Output) technique which receives at a plurality of antenna elements radio signals transmitted from a plurality of antenna elements and performs wireless communication.

Background Art

In recent years, in a wireless communication system typified by mobile telephones, service modes become diversified, and it is required to transmit high-capacity data such as static image and moving picture image as well as speech data. In response, a MIMO system that realizes high frequency-use-efficiency is actively studied.

Techniques for improving a transmission rate in the MIMO system include an SDM (Space Division Multiplexing) scheme (for example, Non-Patent Document 1). The SDM scheme transmits different signals from a plurality of antennas at the same time and demultiplexes the signals at the receiving side.

In addition, channel estimation information is required for demultiplexing the signals. Compared to a SISO (Single Input Single Output) system, SDM can realize transmission capacity multiplied by "the number of transmitting antennas."

Signal demultiplexing processing at the receiving side includes spatial filtering such as zero forcing and MMSE (Minimum Mean Square Error), and MLD (Maximum Likelihood Detection) processing (for example, Patent Document 1). When these signal demultiplexing algorithms are compared, the MLD processing provides the best reception characteristics.

Patent Document 1: Japanese Unexamined Patent Publication No.2003-516036

Non-Patent Document 1: A. van Zelst, "Space Division Multiplexing Algorithms", 10th Mediterranean Electro technical Conf. (MELECON)2000, Cyprus, May 2000, Vol. 3, pp. 1218-1221.

Disclosure of Invention

Problems to be Solved by the Invention

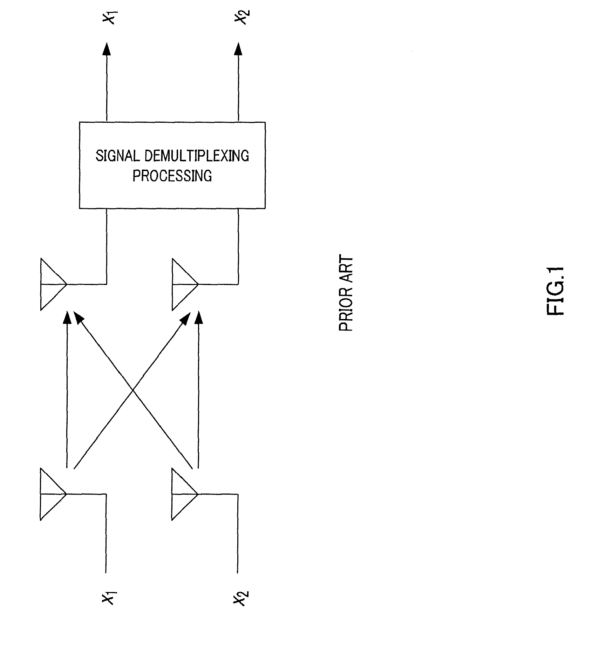

However, with the above-described SDM scheme, the number of signals that can be multiplexed at the transmitting side depends on the number of transmitting antennas, and there is a problem that multiplexing above the number of transmitting antennas cannot be performed. For example, a $2 \times 2$ MIMO system as shown in FIG.1 has two transmitting antennas and can multiplex two different signals $x_1$ and $x_2$ at the transmitting side and extract the signals by performing signal demultiplexing processing at the receiving side. However, it is not possible to multiplex three or more different signals at the transmitting side, and there is a limit to data rate improvement.

It is therefore an object of the present invention to provide a transmitting apparatus, receiving apparatus and communication method that enable data rate improvement in a MIMO system.

Means for Solving the Problem

The transmitting apparatus of the present invention adopts a configuration including: a plurality of transmitting antennas; a multiplexing section that multiplexes transmission signals with a number of multiplexing equal to or larger than the number of transmitting antennas by combining a first transmission signal with a second transmission signal and combining the first transmission signal with a third transmission signal different from the first transmission signal; and a transmitting section that transmits the multiplexed transmission signals from the plurality of transmitting antennas.

The receiving apparatus of the present invention adopts a configuration including: a plurality of receiving antennas; a demultiplexing section that extracts received combined signals combining a first transmission signal with a second transmission signal and combining the first transmission signal with a third transmission signal different from the first transmission signal by demultiplexing received signals received at the plurality of receiving antennas; and a detecting section that cancels the first transmission signal, detects the second transmission signal and third transmission signal from the received combined signals and restores the canceled first transmission signal using the detected second transmission signal and third transmission signal.

Advantageous Effect of the Invention

According to the present invention, it is possible to improve the data rate in a MIMO system.

Brief Description of Drawings

FIG. 1 shows a schematic configuration of a commonly used 2x2 MIMO system;
FIG.2 is a block diagram showing a schematic configuration of a transmission and reception system according to Embodiment 1 of the present invention;
FIG.3 is a sequence diagram showing communication steps of the transmission and reception system shown in FIG.2;
FIG.4 is a block diagram showing a configuration of a base station shown in FIG.3;
FIG. 5A shows signal point constellation for combined signal $X_1$;
FIG. 5B shows signal point constellation for combined signal $X_2$;
FIG.6 is a block diagram showing a configuration of a mobile station shown in FIG.4;
FIG.7 illustrates a specific example of a multiplexing number determination method in a multiplexing number determining section shown in FIG.6;
FIG. 8 shows an MCS table when the number of multiplexing is two;
FIG.9 shows an MCS table when the number of multiplexing is three;
FIG.10 is a block diagram showing an internal configuration of a multiplex signal detecting section shown in FIG.6;
FIG.11 is a flowchart illustrating a method for determining an MLD evaluation formula at a received signal level determining section shown in FIG.10;
FIG.12 shows correspondence relationships between received signal level determination results and maximum likelihood detection control information;
FIG.13 is a block diagram showing a configuration of a base station according to Embodiment 2 of the present invention;
FIG.14 is a block diagram showing a configuration of amobile station according to Embodiment 2 of the present invention;
FIG.15 illustrates a specific example of a multiplexing number determination method in a multiplexing number determining section shown in FIG. 14;
FIG.16 shows an MCS table when the number of multiplexing is four;
FIG.17 is a block diagram showing an internal configuration of a multiplex signal detecting section shown in FIG.14;
FIG.18 is a flowchart illustrating a method for determining anMLD evaluation formula in a received signal level determining section shown in FIG.17;
FIG.19 shows correspondence relationships between received signal level determination results and maximum likelihood detection control information;
FIG.20 is a block diagram showing a configuration of amobile station according to Embodiment 3 of the present invention;
FIG.21 shows signal point constellation for a received combined signal;
FIG.22 is a block diagram showing a configuration of a base station according to Embodiment 4 of the present invention;
FIG.23 is a block diagram showing a configuration of amobile station according to Embodiment 4 of the present invention; and
FIG.24 is a block diagram showing an internal configuration of a multiplex signal detecting section shown in FIG.23.

Best Mode for Carrying Out the Invention

Embodiments of the present invention will be described in detail with reference to the accompanying drawings. In the embodiments, components having the same functions will be assigned the same reference numerals without further explanations.

(Embodiment 1)

In Embodiment 1 of the present invention, for ease of explanation, a 2x2 MIMO system is assumed where the number of transmitting antennas is two and the number of receiving antennas is two, and it is assumed that three transmission signals $x_1$, $x_2$ and $x_3$ are multiplexed in this $2\times2$ MIMO system.

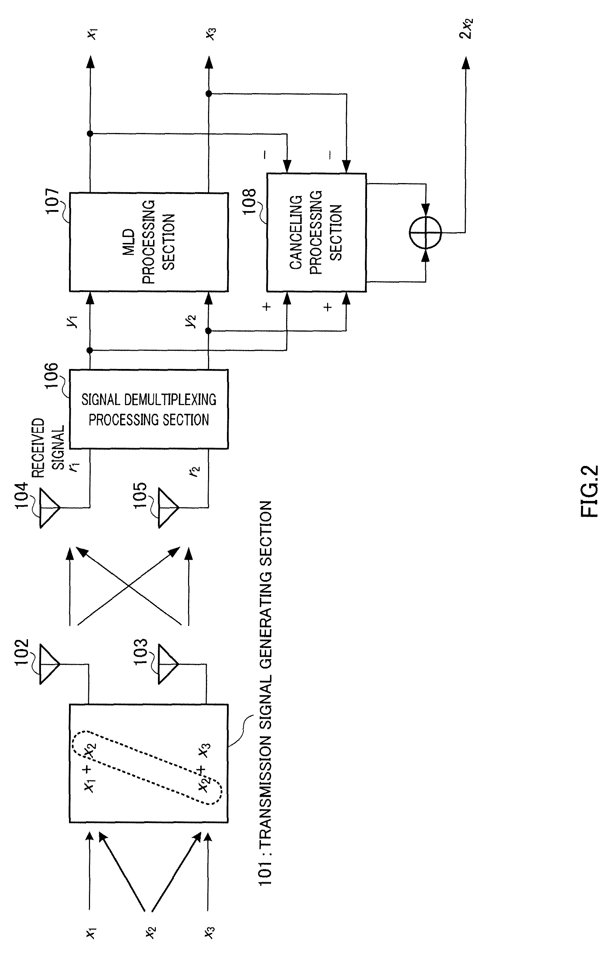

FIG.2 is a block diagram showing a schematic configuration of the transmission and reception system according to Embodiment 1 of the present invention. In this figure, transmission signal generating section 101 of the transmitting side combines one signal $x_2$ out of three signals with the other two signals $x_1$ and $x_3$, respectively, and generates two combined signals $x_1+x_2$ and $x_2+x_3$. Transmission signal generating section 101 then transmits the generated combined signals from transmitting antennas 102 and 103. According to this transmission method, $x_2$ is transmitted from a plurality of antennas, so that the influence of $x_2$ can be canceled at the receiving side. The two transmitted combined signals pass through a channel, and the two combined signals are received in a mixed state at receiving antennas 104 and 105 of the receiving side. Here, $r_1$ and $r_2$ show received signals at receiving antennas 104 and 105, respectively.

Signal demultiplexing processing section 106 of the receiving side demultiplexes received signals $r_1$ and $r_2$ into signals $y_1$ and $y_2$ by signal demultiplexing processing such as ZF (Zero Forcing). MLD processing section 107 generates an MLD evaluation formula using $y_1$ and $y_2$, and performs MLD processing. Here, MLD processing section cancels $x_2$ from $y_1$ and $y_2$, generates an evaluation formula for $x_1$ and $x_3$ and performs maximum likelihood detection. As a result of the MLD processing, $x_1$ ad $x_3$ are detected. Further, canceling processing section 108 detects $x_2$ by canceling detected $x_1$ and $x_3$ from $y_1$ and $y_2$ and combining the results. In this case, gain by combining is produced with respect to $x_2$.

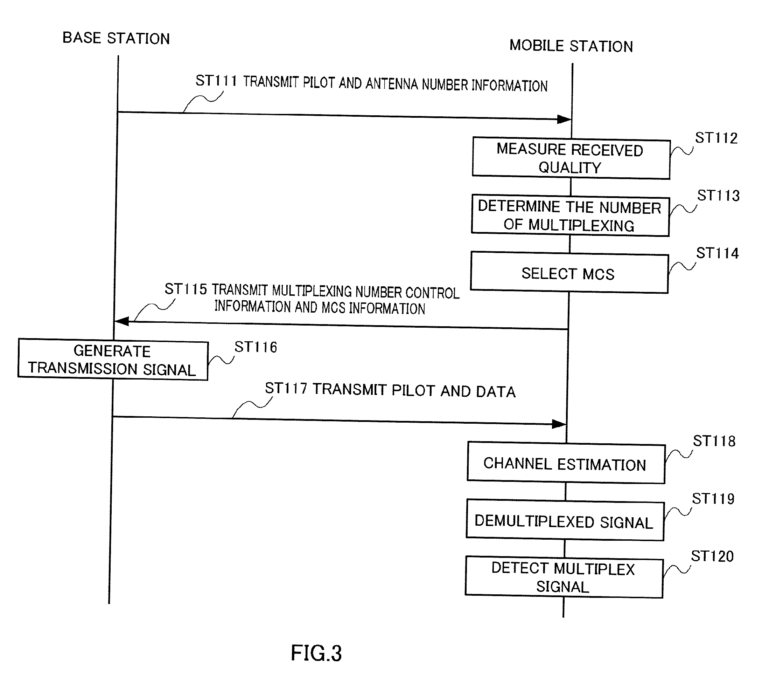

Next, communication steps will be described using FIG.3 where the above-described transmitting side is a base station and the receiving side is a mobile station. In FIG.3, in step (hereinafter "ST") 111, a pilot signal is transmitted from the base station to the mobile station when communication starts. At this time, antenna number information showing the number of transmitting antennas of the base station (hereinafter "base station antenna number") is also reported to the mobile station.

In ST112, the mobile station receives the pilot signal from the base station and measures received quality of the received pilot signal. In ST113, based on the measurement result of received quality and the base station antenna number information, the mobile station determines the number of multiplexing for signals (transmission signals) transmitted by the base station. For example, when the received quality is extremely good, the mobile station determines the number of multiplexing so that the number of multiplexing exceeds the base station antenna number. On the other hand, when the received quality is not extremely good, the mobile station determines the number of multiplexing so that the number of multiplexing is smaller than the base station antenna number.

In ST114, an MCS (Modulation and Coding Scheme) is selected according to the determined number of multiplexing. For example, when the number of multiplexing is determined three for two base station antennas, MCS combinations for three transmission signals are determined. Possible MCS combinations include combinations that further improve a data rate while maintaining received quality and combinations that improve received quality while maintaining a data rate.

In ST115, information of the determined number of multiplexing (multiplexing number control information) and information of the selected MCS (MCS information) are reported from the mobile station to the base station.

In ST116, the base station receives the multiplexing number control information and the MCS information from the mobile station, and generates a transmission signal based on the multiplexing number control information and the MCS information. Here, when the multiplexing number control information shows that the number of multiplexing is three for two base station antennas, by combining one signal out of three transmission signals with another signal and with the other signal, respectively, two combined signals are generated. In ST117, the generated combined signals are transmitted with a pilot signal from the base station to the mobile station as data signals.

In ST118, the mobile station receives the signals transmitted from the base station, extracts the pilot signal from the received signals and performs channel estimation. In ST119, the received signals are demultiplexed based on the estimated channel information.

When the number of multiplexing determined in ST113 exceeds the number of base station antennas, in ST120, the mobile station detects a multiplex signal based on the MCS information and detects the signals combined at the transmitting side. From the above-described processing, the mobile station can acquire received data.

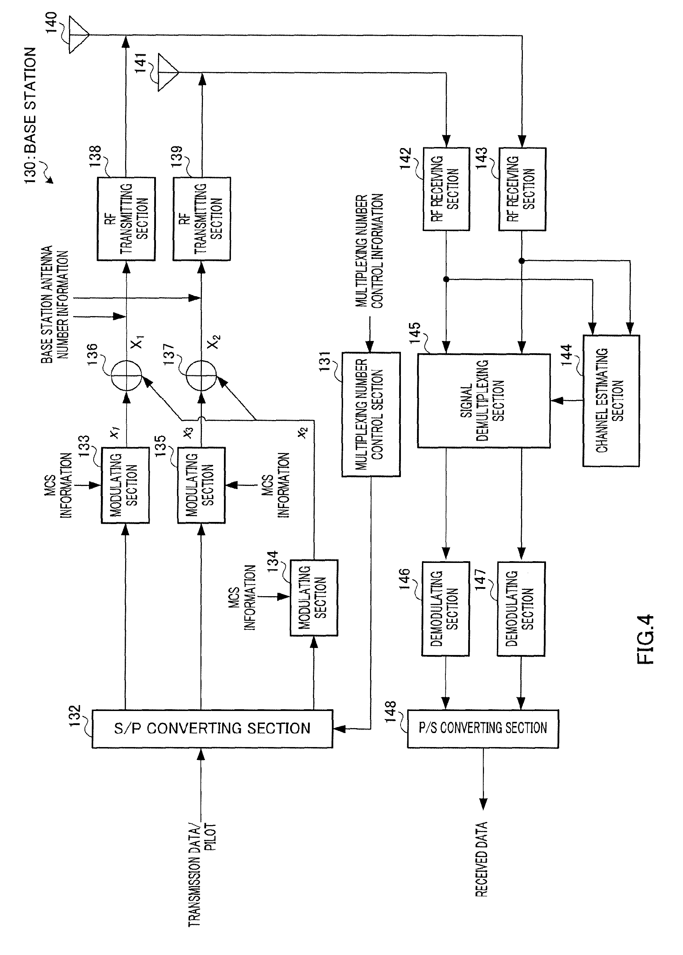

FIG.4 is a block diagram showing a configuration of base station 130 shown in FIG.3. In this figure, multiplexing number controlling section 131 acquires the multiplexing number control information transmitted from the mobile station and controls S/P converting section based on the acquired multiplexing number control information.

S/P converting section 132 converts transmission data to parallel data of two series or three series according to the control by multiplexing number controlling section 131. When the transmission data is converted to parallel data of two series, S/P converting section 132 outputs the parallel data of two series to modulating sections 133 and 135, respectively, and, when the transmission data is converted to parallel data of three series, S/P converting section 132 outputs the parallel data of three series to modulating sections 133 to 135, respectively.

Modulating sections 133 to 135 acquire the MCS information transmitted from the mobile station and performs modulation processing on the signals outputted from S/P converting section 132 based on the acquired MCS information. The signal modulated by modulating section 133 is outputted to adder 136, the signal modulated by modulating section 134 is outputted to adders 136 and 137, and the signal modulated by modulating section 135 is outputted to adder 137. In addition, modulating section 134 does not operate when no signal is outputted from S/P converting section 132.

When a modulated signal is outputted from modulating section 134, adder 136 combines the modulated signal outputted from modulating section 134 with a modulated signal outputted from modulating section 133, and outputs the combined signal to RF transmitting section 138. Further, when no modulated signal is outputted from modulating section 134, adder 136 outputs a signal outputted from modulating section 133 to RF transmitting section 138.

When a modulated signal is outputted from modulating section 134, adder 137 combines the modulated signal outputted from modulating section 134 with a modulated signal outputted from modulating section 135 and outputs the combined signal to RF transmitting section 139. Further, when no modulated signal is outputted from modulating section 134, adder 137 outputs a signal outputted from modulating section 135 to RF transmitting section 139.

RF transmitting section 138 performs predetermined transmission processing such as up-conversion on the signal outputted from adder 136 and transmits the signal subjected to the transmission processing from antenna 140.

Further, RF transmitting section 139 performs predetermined transmission processing such as up-conversion on the signal outputted from adder 137, and transmits the signal subjected to the transmission processing from antenna 141.

RF receiving sections 142 and 143 perform predetermined reception processing such as down-conversion on the signals (received signals) received at antennas 140 and 141, and output the signals subjected to the reception processing to signal demultiplexing section 145. Further, RF receiving sections 142 and 143 extract pilot signals from the received signals by performing the reception processing, and output the extracted pilot signals to channel estimating section 144.

Channel estimating section 144 performs channel estimation based on the pilot signals outputted from RF receiving sections 142 and 143, and outputs the estimated value to signal demultiplexing section 145 as channel estimation information.

Signal demultiplexing section 145 demultiplexes the signals outputted from RF receiving sections 142 and 143 by zero forcing, MMSE, and the like, based on the channel estimation information outputted from channel estimating section 144, and outputs the demultiplexed signals to demodulating sections 146 and 147.

Demodulating sections 146 and 147 demodulate the signals outputted from signal demultiplexing section 145, and P/S converting section 148 converts the demodulated signals to serial data and outputs the serial data as received data.

Next, the operation of the transmitting side of above-described base station 130 will be described. When base station 130 starts communication with the mobile station, base station 130 first converts a pilot signal to parallel data at S/P converting section 132, modulates the parallel data at modulating sections 133 and 135, then up-converts the modulated signals at RF transmitting sections 138 and 139, and transmits the results to the mobile station from two antennas 140 and 141. Further, base station 130 also transmits base station antenna number information to the mobile station.

Base station 130 then acquires multiplexing number control information and MCS information from the mobile station. In this embodiment, a 2x2 MIMO system is assumed where the number of multiplexing is three, and the multiplexing number control information acquired from the mobile station shows that the number of multiplexing is three.

According to the multiplexing number control information acquired by multiplexing number controlling section 131, S/P converting section 132 is controlled so that the transmission data is converted to parallel data of three series, and the parallel data of three series is outputted to modulating sections 133 to 135, respectively. In this case, the transmission data is outputted from S/P converting section 132, and modulating section 134 operates.

Modulating sections 133 to 135 modulate transmission data based on the MCS information acquired from the mobile station. Adders 136 and 137 combine the modulated signals outputted from modulating sections 133 and 135 with the modulated signal outputted from modulating section 134, and generate two combined signals $X_1$ and $X_2$. RF transmitting sections 138 and 139 up-convert the two combined signals and transmit the results to the mobile station from antennas 140 and 141.

Here, when the signals modulated at modulating sections 133 to 135 are $x_1$, $x_2$ and $x_3$, combined signals $X_1$ and $X_2$ can be expressed as follows.

[1]

$$X_1 = x_1 + x_2$$
$$X_2 = x_2 + x_3$$

…(Equation 1)

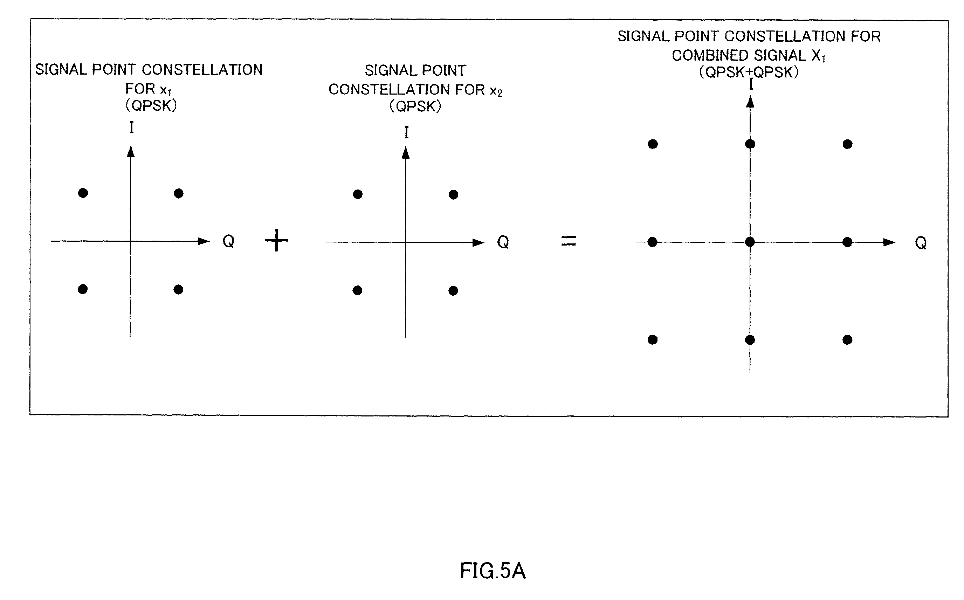

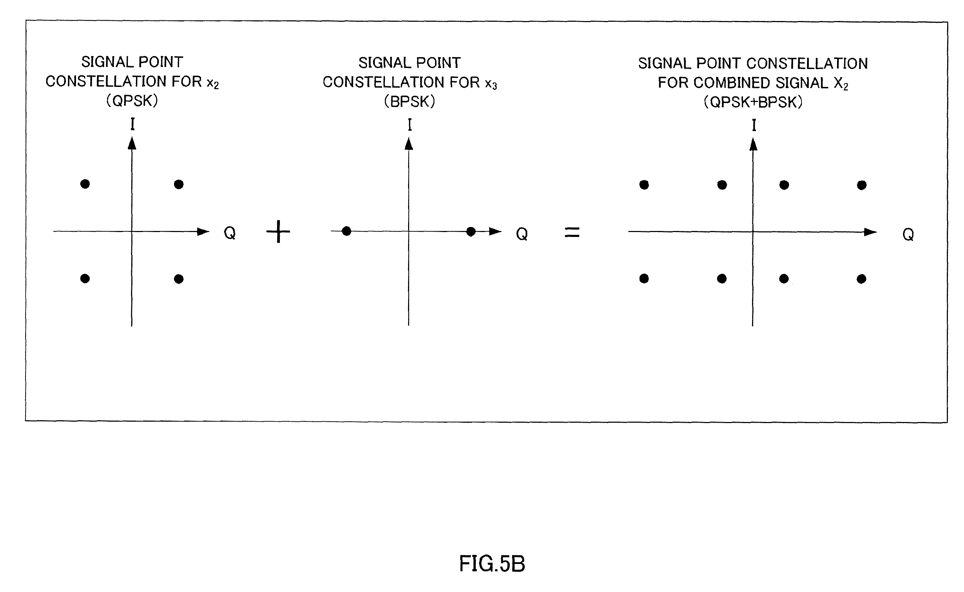

If the modulation scheme for $x_1$ is QPSK, the modulation scheme for $x_2$ is QPSK, and the modulation scheme for $x_3$ is BPSK, the signal point constellation for combined signal $x_1$ is as shown in FIG.5A, and the signal point constellation for combined signal $x_2$ is as shown in FIG. 5B.

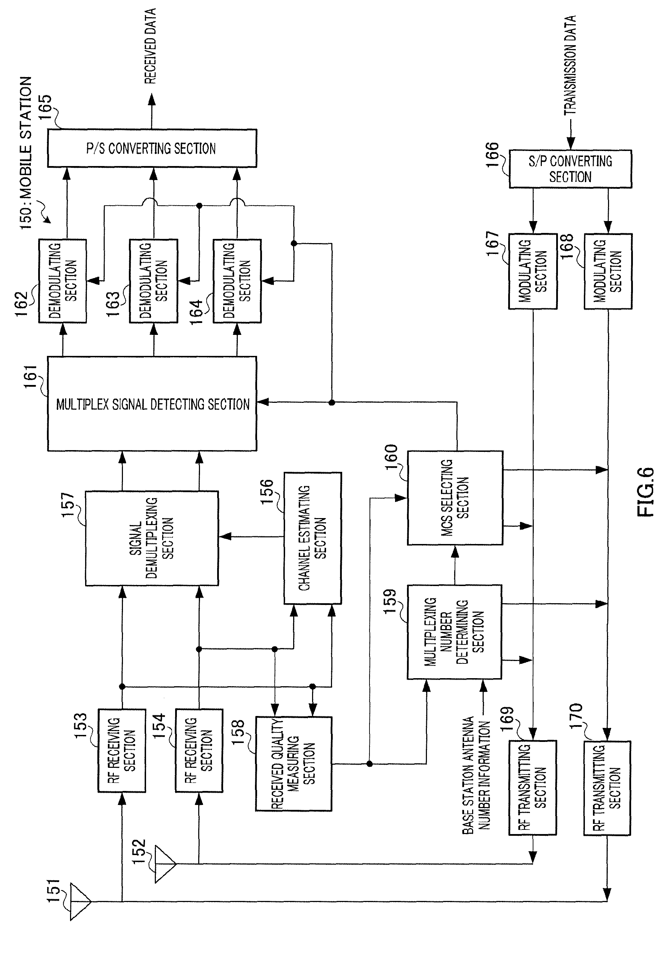

FIG.6 is a block diagram showing a configuration of mobile station 150 shown in FIG.4. In this figure, RF receiving sections 153 and 154 perform predetermined reception processing such as down-conversion on the signals (received signals) received at antennas 151 and 152, and output the signals subjected to the reception processing to signal demultiplexing section 157. Further, RF receiving sections 153 and 154 extract the pilot signals from the received signals by performing the reception processing, and output the extracted pilot signals to channel estimating section 156 and received quality measuring section 158.

Channel estimating section 156 performs channel estimation based on the pilot signals outputted from RF receiving sections 153 and 154, and outputs the estimated value to signal demultiplexing section 157 as channel estimation information.

Signal demultiplexing section 157 demultiplexes the signals outputted from RF receiving sections 153 and 154 by zero forcing, MMSE, and the like, based on the channel estimation information outputted from channel estimating section 156, and outputs the demultiplexed signals to multiplex signal detecting section 161.

Received quality measuring section 158 measures a mean value, minimum value and the like of received power of the pilot signals outputted from RF receiving sections 153 and 154, and outputs the measurement results (hereinafter "received quality information") to multiplexing number determining section 159 and MCS selecting section 160. Further, indexes of received quality include a pilot received SNR (Signal to Noise Ratio), pilot received SIR (Signal to Interference Ratio) and pilot received SINR (Signal-to-Interference and Noise Ratio) in addition to the received power of the pilot signals.

Multiplexing number determining section 159 acquires the base station antenna number information transmitted from base station 130 and determines the number of multiplexing for signals to be transmitted from base station 130 based on the acquired base station antenna number information and the received quality information outputted from received quality measuring section 158.

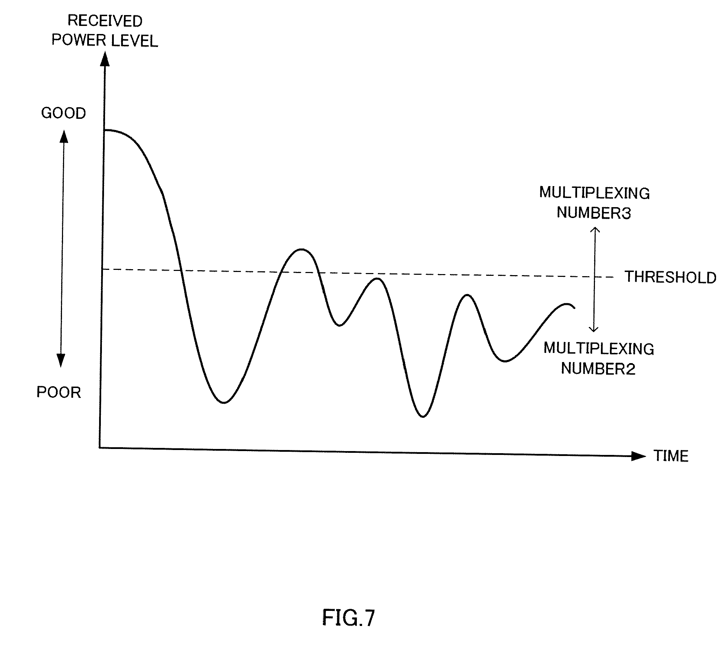

A specific example of a method for determining the number of multiplexing will be described using FIG. 7. In FIG. 7, pilot received power is used as received quality information, and the base station antenna number information is 2. As shown in FIG.7, multiplexing number determining section 159 determines that the number of multiplexing is three when the received power level is equal to or higher than a given threshold, and determines that the number of multiplexing is two when the received power level is lower than the threshold. In this embodiment, a case is assumed where the received power level is equal to or higher than the threshold and the number of multiplexing is determined three in a 2×2 MIMO system. Multiplexing number control information showing the determined number of multiplexing is outputted to MCS selecting section 160 and transmitted to base station 130.

MCS selecting section 160 selects a modulation scheme and coding rate to be applied to base station 130 from an MCS table provided in advance, based on received quality information outputted from received quality measuring section 158 and multiplexing number control information outputted from multiplexing number determining section 159. Hereinafter, for ease of explanation, the modulation scheme alone, not including the coding rate, will be described.

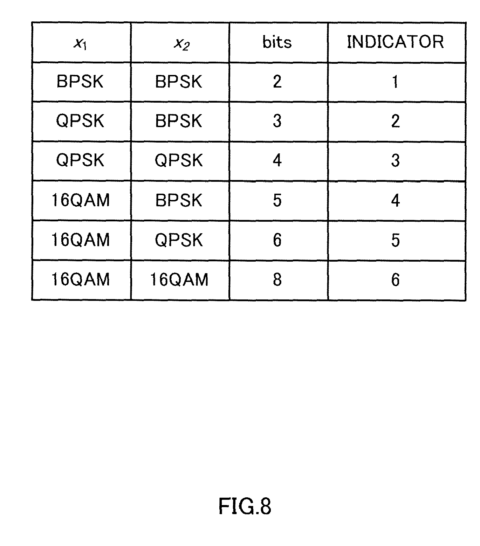

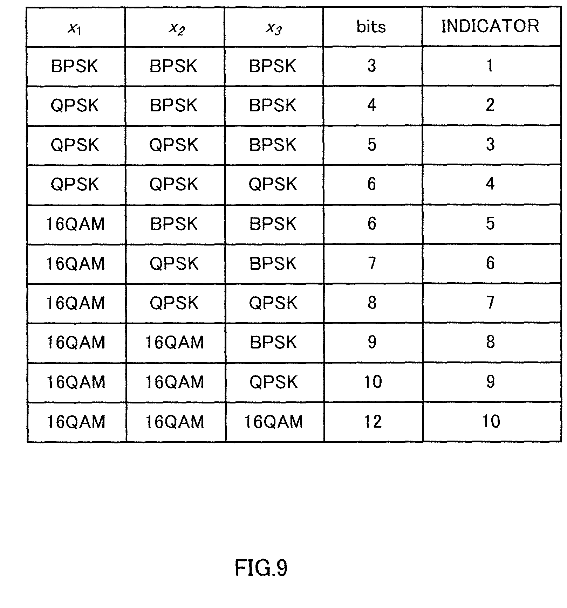

Here, when the modulation schemes applicable for base station 130 include BPSK, QPSK and 16QAM and the number of multiplexing is two, MCS selecting section 160 selects an MCS from the MCS table as shown in FIG.8. When the number of multiplexing is three, MCS selecting section 160 selects an MCS from the MCS table as shown in FIG.9. As can be seen from FIG.8 and FIG.9, the case where the number of multiplexing is three allows more variations in the setting of the number of transmission bits, such as seven bits, than the case where the number of multiplexing is two, so that it is possible to transmit numbers of transmission bits, for example, seven bits, that are not possible when the number of multiplexing is two. Further, by increasing the number of multiplexing, it is possible to reduce a modulation level of transmission signals without changing a data rate, so that it is possible to improve received quality.

MCS selecting section 160 outputs an indicator corresponding to the selected MCS (modulation scheme) to multiplex signal detecting section 161 and demodulating sections 162 to 164 as MCS information, and transmits the indicator to base station 130.

Multiplex signal detecting section 161 selects an MLD evaluation formula based on the received signal level of the signals outputted from signal demultiplexing section 157, detects the combined signal combined at base station 130 using the selected MLD evaluation formula and the MCS information outputted from MCS selecting section 160, and acquires signals before combining as detected signals. The acquired detected signals are outputted to demodulating sections 162 to 164. Multiplex signal detecting section 161 will be described in detail later.

Demodulating sections 162 to 164 demodulate the signals outputted from multiplex signal detecting section 161 based on the MCS information outputted from MCS selecting section 160 and outputs demodulated signals to P/S converting section 165. In addition, when the number of multiplexing is two, one of demodulating sections 162 to 164 does not operate.

P/S converting section 165 converts the signals outputted from demodulating sections 162 to 164 to serial data and outputs the serial data as received data.

On the other hand, at the transmitting side, the transmission data is converted to parallel data at S/P converting section 166, modulated at modulating sections 167 and 168, and subjected to predetermined transmission processing such as up-conversion at RF transmitting sections 169 and 170, and then transmitted to mobile station 150 from antennas 151 and 152.

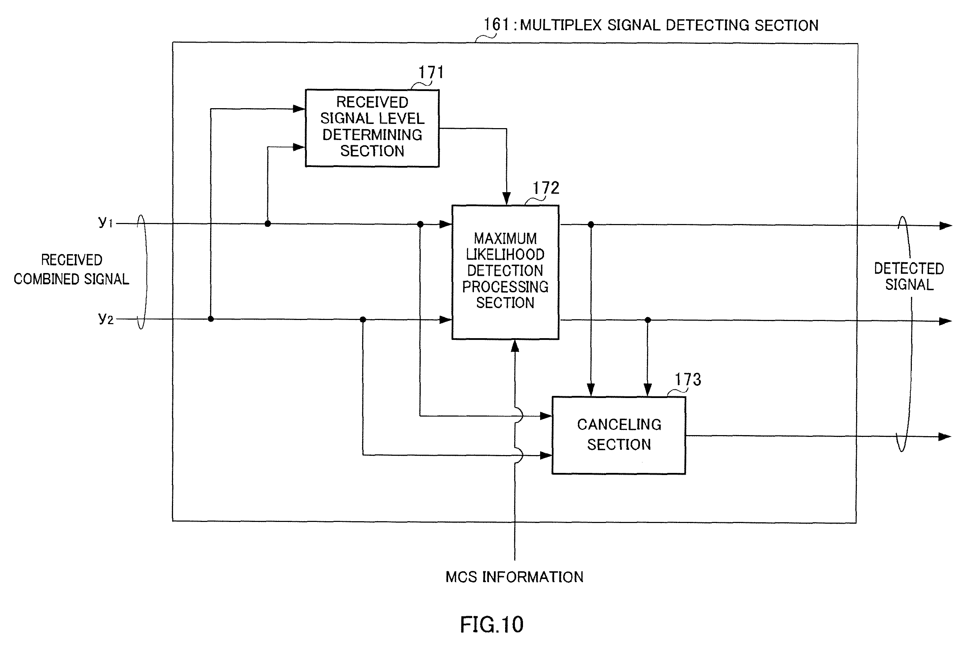

FIG.10 is a block diagram showing an internal configuration of multiplex signal detecting section 161 shown in FIG.6. Here, when the signals outputted from signal demultiplexing section 157 are received combined signals $y_1$ and $y_2$ and noise power at the receiving antennas is $n_1$ and $n_2$, received combined signals $y_1$ and $y_2$ can be expressed as follows using transmission signals and noise power.

[2]

$$y_1 = X_1 + n_1 = x_1 + x_2 + n_1$$
$$y_2 = X_2 + n_2 = x_2 + x_3 + n_2$$

…(Equation 2)

In FIG.10, received signal level determining section 171 determines an MLD evaluation formula at maximum likelihood detection processing section 172 according to the received level of received combined signals $y_1$ and $y_2$ and generates maximum likelihood detection control information showing the determined evaluation formula. The generated maximum likelihood detection control information is outputted to maximum likelihood detection processing section 172.

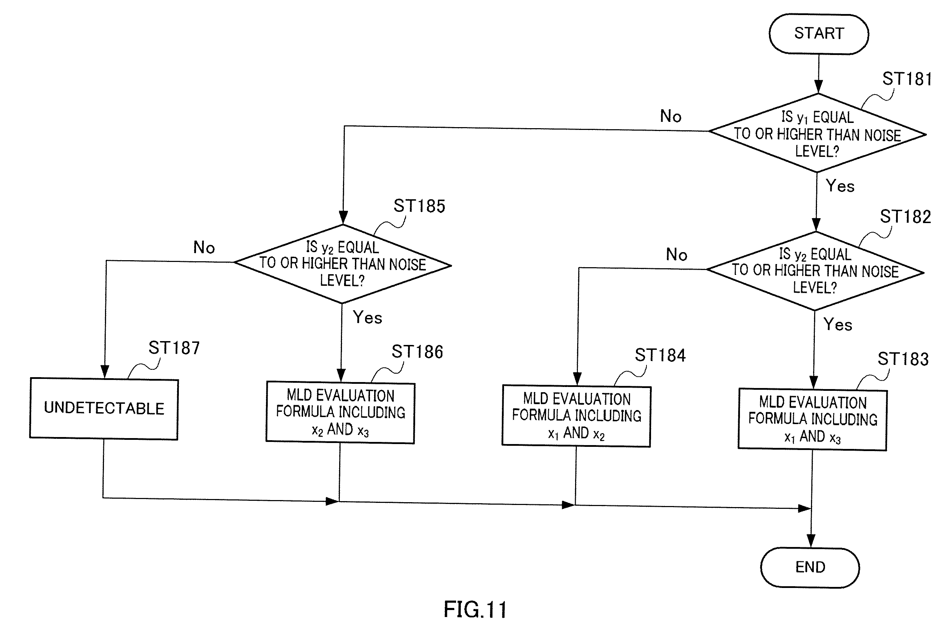

FIG.11 is a flowchart illustrating a method for determining an MLD evaluation formula at received signal level determining section 171. In this figure, in ST181, it is determined whether or not received combined signal $y_1$ is equal to or higher than the noise level, and, when received combined signal $y_1$ is determined equal to or higher than the noise level ("Yes"), the flow shifts to ST182, and, when received combined signal $y_1$ is determined lower than the noise level ("No"), the flow shifts to ST185.

In ST182, it is determined whether or not received combined signal $y_2$ is equal to or higher than the noise level, and, when received combined signal $y_2$ is determined equal to or higher than the noise level ("Yes"), the flow shifts to ST183, and, when received combined signal $y_2$ is determined lower than the noise level ("No"), the flow shifts to ST184.

In ST183, an MLD evaluation formula including $x_1$ and $x_3$ is determined, and, in ST184, an MLD evaluation formula including $x_1$ and $x_2$ is determined.

In ST185, it is determined whether or not received combined signal $y_2$ is equal to or higher than the noise level, and, when received combined signal $y_2$ is determined equal to or higher than the noise level ("Yes"), the flow shifts to ST186, and, when received combined signal $y_2$ is determined lower than the noise level ("No"), the flow shifts to ST187.

In ST186, an MLD evaluation formula including $x_2$ and $x_3$ is determined, but, in ST187, the received combined signal cannot be detected, and an MLD evaluation formula cannot be determined. The reason that the received combined signals cannot be detected is that two transmission signals are combined ($x_1+x_2$ and $x_2+x_3$). For example, when the transmission signals employ the same modulation scheme and are combined out of phase, even if the received SNR is good, the signal power falls substantially, and the received combined signals may be lower than the noise level. Further, even when all three transmission signals employ the same modulation scheme, both received combined signals $y_1$ and $y_2$ may be lower than the noise level. In this case, the received combined signals cannot be detected. However, by performing power control or the like at the transmitting side, it is possible to reduce the possibility that the received combined signals are lower than the noise level, and therefore cases rarely occur where the received combined signals cannot be detected.

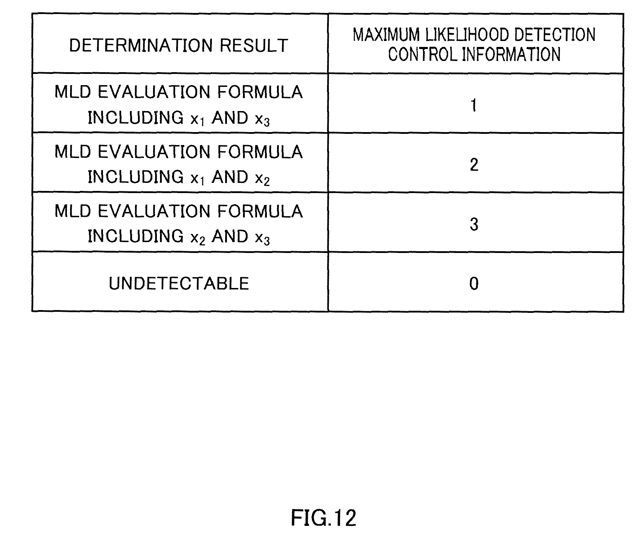

In this way, received signal level determining section 171 determines four cases, where both received combined signals $y_1$ and $y_2$ are equal to or higher than the noise level, where received combined signal $y_1$ is equal to or higher than the noise level, where received combined signal $y_2$ is equal to or higher than the noise level, and where the both received combined signals are lower than the noise level. Received signal level determining section 171 determines MLD evaluation formulas according to each of the above four cases, and outputs maximum likelihood detection control information showing the determined MLD evaluation formulas as shown in FIG.12 to maximum likelihood detection processing section 172.

Maximum likelihood detection processing section 172 performs maximum likelihood detection (MLD) processing based on received combined signals $y_1$ and $y_2$, MCS information, and the maximum likelihood detection control information outputted from received signal level determining section 171, and detects transmission signals. The detected signals are outputted to canceling section 173 and outputted from multiplex signal detecting section 161. The MLD processing according to maximum likelihood detection control information 1 to 3 shown in FIG.12 will be described below.

First, a case will be described where the maximum likelihood detection control information shows 1, that is, where an MLD evaluation formula including $x_1$ and $x_3$ is determined at received signal level determining section 171. In this case, both received combined signals $y_1$ and $y_2$ are equal to or higher than the noise level, and therefore $x_2$ is canceled from equation 2, and an MLD evaluation formula for $x_1$ and $x_3$ is generated. In this case, the MLD evaluation formula can be expressed as follows.

[3]

$$(x_1, x_3) = \arg\min_{x_1, x_3} \left| (y_1 - y_2) - (x'_1 - x'_3) \right| \qquad \dots (\text{Equation 3})$$

Maximum likelihood detection processing section 172 specifies a modulation scheme from the MCS information, generates replicas $(x'_1 - x'_3)$ for all combinations of signal point constellation for $(x_1 - x_3)$, compares the generated replicas with the difference between the received combined signals $(y_1 - y_2)$, and makes the combination of $x'_1$ and $x'_3$ that minimizes the difference between $(y_1 - y_2)$ and $(x'_1 - x'_3)$ a detected signal.

Next, a case will be described where the maximum likelihood detection control information shows 2, that is, where an MLD evaluation formula including $x_1$ and $x_2$ is determined at received signal level determining section 171. In this case, the received signal level of received combined signal $y_2$ is lower than the noise level, and therefore MLD processing is performed using received combined signal $y_1$ alone. In this case, theMLD evaluation formula can be expressed as follows.

[4]

$$(x_1, x_2) = \arg\min_{x_1, x_2} \left| y_1 - (x'_1 + x'_2) \right| \qquad \dots (\text{Equation 4})$$

Maximum likelihood detection processing section 172 specifies a modulation scheme from the MCS information, generates replicas $(x'_1 + x'_2)$ for all combinations of signal point constellation for $(x_1 + x_2)$, compares the generated replicas with received combined signal $y_1$, and makes the combination of $x'_1$ and $x'_2$ that minimizes the difference between $y_1$ and $(x'_1 + x'_2)$ a detected signal.

Further, when the MCS information shows that $x_2$ and $x_3$ employ the same modulation scheme, the signals are combined out of phase, and the level of received combined signal $y_2$ may fall. For example, when the modulation schemes for $x_2$ and $x_3$ are both QPSK, the combined signal of baseband signals $x_2=1+j$ and $x_3=-1-j$ becomes $x_2+x_3=0$. In this case, $x_2=-x_3$, and therefore $x_3$ can be derived using $x_2$ detected in equation 4.

Next, a case will be described where the maximum likelihood detection control information shows 3, that is, where an MLD evaluation formula including $x_2$ and $x_3$ is determined at received signal determining section 171. In this case, the received signal level of received combined signal $y_1$ is lower than the noise level, and therefore MLD processing is performed using received combined signal $y_2$ alone. In this case, theMLD evaluation formula can be expressed as follows.

[5]

$$(x_2, x_3) = \arg\min_{x_2, x_3} \left| y_2 - (x'_2 + x'_3) \right| \qquad \dots (\text{Equation 5})$$

Maximum likelihood detection processing section 172 specifies a modulation scheme from the MCS information, generates replicas $(x'_2 + x'_3)$ for all combinations of signal point constellation for $(x_2 + x_3)$, compares the generated replicas with received combined signal $y_2$, and makes the combination of $x'_2$ and $x'_3$ that minimizes the difference between $y_2$ and $(x'_2 + x'_3)$ a detected signal.

Further, when the MCS information shows that $x_1$ and $x_2$ have the same modulation scheme, the signals are combined out of phase, and the level of received combined signal $y_1$ may fall. For example, when the modulation schemes of $x_1$ and $x_2$ are both QPSK, the combined signal of baseband signals $x_1=1+j$ and $x_2=-1-j$ becomes $x_1+x_2=0$. In this case, $x_1=-x_2$, and therefore $x_1$ can be derived using $x_2$ detected from equation 5.

With any of above-described maximum likelihood detection control information 1 to 3, when the received combined signals in the MLD evaluation formula employ the same modulation scheme, signal points in the constellation overlap, and detection errors of transmission signals are likely to occur. However, by performing power control or phase rotation at the transmitting side, it is possible to make detection errors less likely to occur.

Canceling section 173 detects the signals canceled at maximum likelihood detection processing section 172 using the received combined signal and the detected signal outputted from maximum likelihood detection processing section 172. The processing of canceling section 173 when the maximum likelihood detection control information shows 1 will be described below.

The received combined signals, and $x_1$ and $x_3$ detected at maximum likelihood detection processing section 172 are known information, and therefore $x_2$ can be expressed as follows from equation 2.

[ 6 ]

$$x_2 = y_1 - x_1$$
$$x_2 = y_2 - x_3 \qquad \text{...(Equation 6)}$$

Accordingly, $x_2$ is obtained by canceling detected signals $x_1$ and $x_3$ from received combined signals $y_1$ and $y_2$. In this case, as shown below, gain is produced with respect to $x_2$ by combining the two equations in equation 6.

[ 7 ]

$$2x_2 = (y_1 + y_2) - (x_1 + x_3) \qquad \text{(Equation 7)}$$

Demodulating sections 162 to 164 demodulate the signals detected at multiplex signal detecting section 161 based on the MCS information. The received data can be obtained by converting the demodulated signals to serial data at P/S converting section 165.

According to Embodiment 1, the transmitting side combines a first modulated signal with a second modulated signal, combines the first modulated signal with a third modulated signal and transmits the two combined signals from two transmitting antennas, and the receiving side performs maximum likelihood detection processing with the number of multiplexing being reduced by canceling the first modulated signal, so that it is possible to reduce a reception processing amount, restore the canceled signal by canceling processing using the second and third modulated signals detected through maximum likelihood detection processing, and, consequently, demodulate signals with a greater number of multiplexing than the number of transmitting antennas. By this means, it is possible to improve the data rate.

In addition, in this embodiment, data transmission from base station 130 to mobile station 150 is assumed, but the present invention can be similarly applied to data transmission from mobile station 150 to base station 130.

Further, in this embodiment, a case has been described where multiplexing of "the number of transmitting antennas + 1" is realized in a 2x2 MIMO system, but multiplexing of "the number of transmitting antennas + 1" can be realized also in a MIMO system having three or more transmitting antennas and three or more receiving antennas using the same method. For example, when four transmission signals of $x_1$, $x_2$, $x_3$ and $x_4$ are transmitted in a 3x3 MIMO system, combined signals $X_1$, $X_2$ and $X_3$ are formed as shown below.

[ 8 ]

$$X_1 = x_1 + x_2 + x_3$$
$$X_2 = x_2 + x_3 + x_4 \qquad \text{...(Equation 8)}$$
$$X_3 = x_3 + x_4 + x_1$$

(Embodiment 2)

In Embodiment 1, a method for realizing multiplexing of "the number of transmitting antennas + 1" has been described, but, in Embodiment 2 of the present invention, a method for realizing multiplexing of "the number of transmitting antennas + 2" will be described. For ease of explanation, a $2 \times 2$ MIMO system will be assumed here where the number of transmitting antennas is two, the number of receiving antennas is two, and it is assumed that four transmission signals of $x_1$, $x_2$, $x_3$ and $x_4$ are multiplexed in this 2x2 MIMO system.

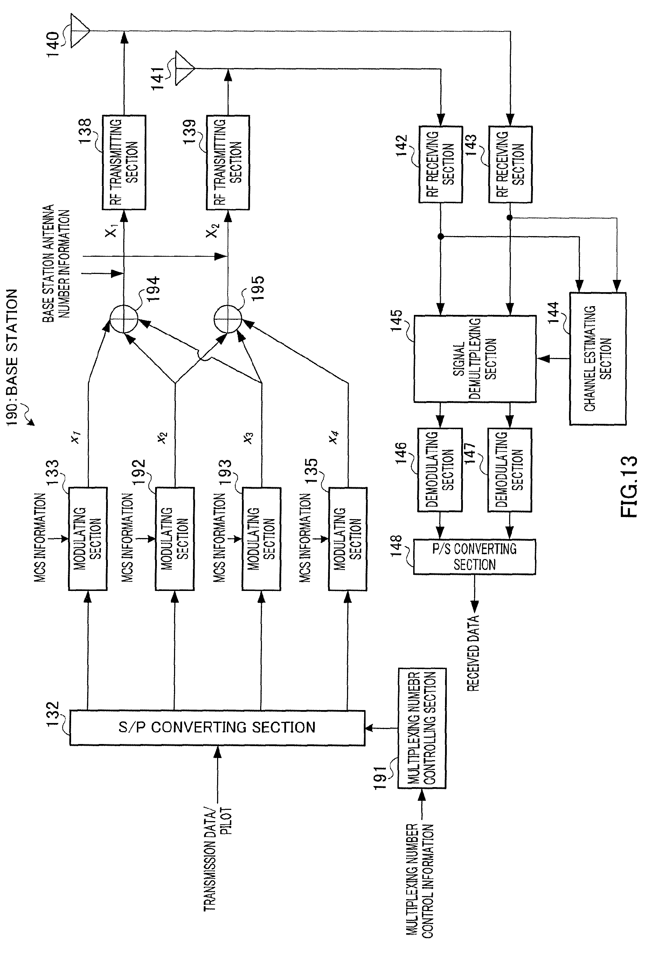

FIG. 13 is a block diagram showing a configuration of base station 190 according to Embodiment 2 of the present invention. Multiplexing number controlling section 191 acquires the multiplexing number control information transmitted from the mobile station and controls S/P converting section 132 based on the acquired multiplexing number control information. Multiplexing number controlling section 191 controls S/P converting section 132 so as to convert transmission data to parallel data of two series when the multiplexing number control information shows 2, convert transmission data to parallel data of three series when the multiplexing number control information shows 3, and convert transmission data to parallel data of four series when the multiplexing number control information shows 4.

S/P converting section 132 converts transmission data to parallel data of two to four series according to the control by multiplexing number controlling section 191. When transmission data is converted to parallel data of two series, S/P converting section 132 outputs the parallel data of two series to modulating sections 133 and 135. When transmission data is converted to parallel data of three series, S/P converting section 132 outputs the parallel data of three series to modulating sections 133, 135 and 192. When transmission data is converted to parallel data of four series, S/P converting section 132 outputs the parallel data of four series to modulating sections 133, 135, 192 and 193.

Modulating sections 133, 135, 192 and 193 acquire MCS information transmitted from the mobile station and modulates the signals outputted from S/P converting section 132 based on the acquired MCS information. The signal modulated by modulating section 133 is outputted to adder 194, the signals modulated by modulating sections 192 and 193 are outputted to adders 194 and 195, and the signal modulated by modulating section 135 is outputted to adder 195. In addition, modulating sections 192 and 193 do not operate if signals are not outputted from S/P converting section 132.

When the signals modulated by modulating sections 133, 135, 192 and 193 are $x_1$, $x_2$, $x_3$ and $x_4$, combined signals $X_1$ and $X_2$ can be expressed as follows.

[9]

$$X_1 = x_1 + x_2 + x_3$$
$$X_2 = x_2 + x_3 + x_4 \qquad \ldots (\text{Equation } 9)$$

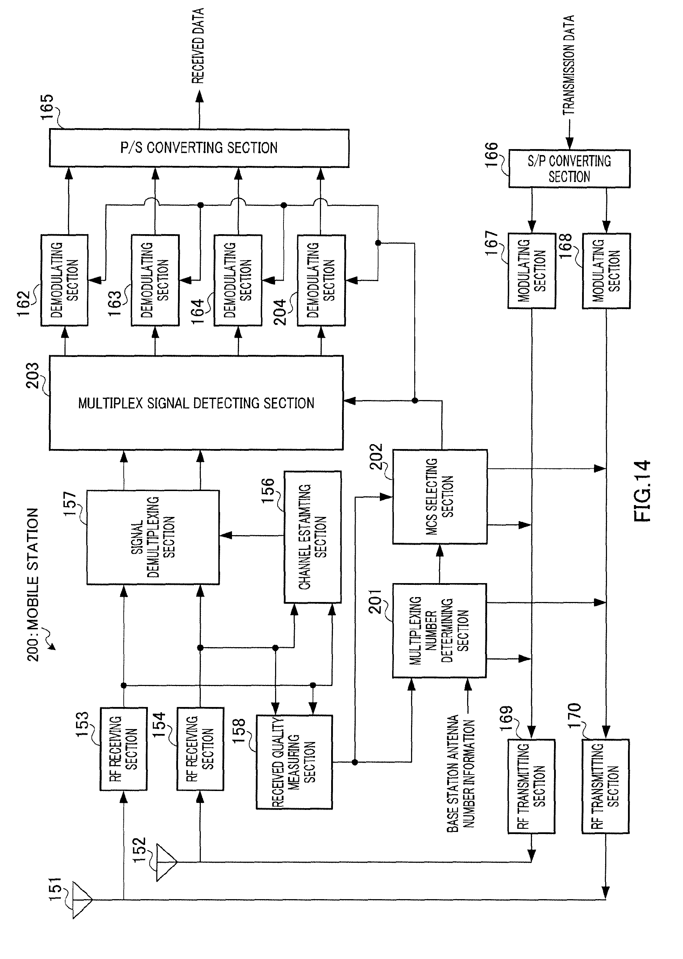

FIG.14 is a block diagram showing a configuration of mobile station 200 according to Embodiment 2 of the present invention. In this figure, multiplexing number determining section 201 acquires base station antenna number information transmitted from base station 190 and determines the number of multiplexing for signals to be transmitted by base station 190 based on the acquired base station antenna number information and received quality information outputted from received quality measuring section 158.

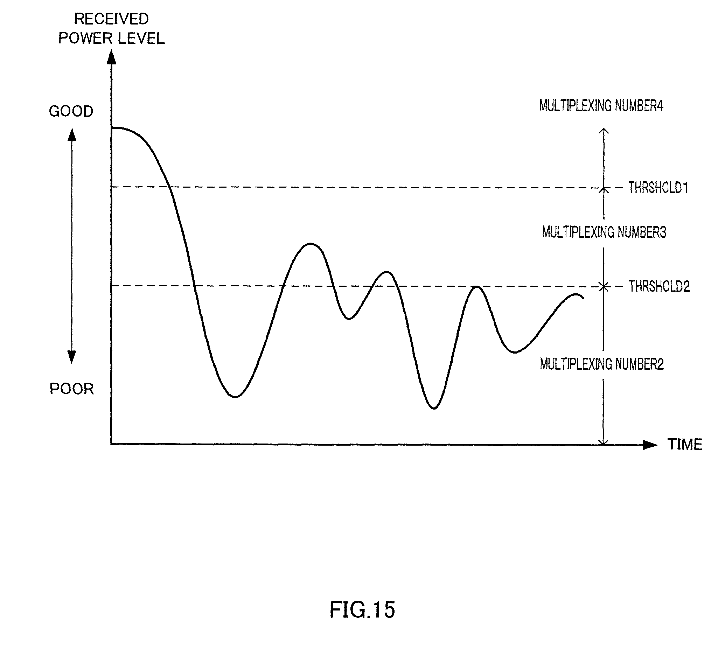

A specific example of a method for determining the number of multiplexing will be described using FIG. 15. In FIG. 15, pilot receivedpower is used as received quality information, and the base station antenna number information is assumed to show 2. As shown in FIG.15, multiplexing number determining section 201 has two different thresholds and determines the number of multiplexing according to threshold decision results of comparing a received power level with threshold 1 and with threshold 2 which is lower than threshold 1. To be more specific, multiplexing number determining section 201 determines that the number of multiplexing is four when the received power level is equal to or higher than threshold 1, determines that the number of multiplexing is three when the received power level is lower than threshold 1 and equal to or higher than threshold 2, and determines that the number of multiplexing is two when the received power level is lower than threshold 2. In this embodiment, a case is assumed where the received power level is equal to or higher than threshold 1 and the number of multiplexing is determined four in a $2 \times 2$ MIMO system. Multiplexing number control information showing the determined number of multiplexing is outputted to MCS selecting section 202 and transmitted to base station 190.

MCS selecting section 202 selects the modulation scheme and coding rate to be applied to base station 190 from a MCS table provided in advance, based on the received quality information outputted from received quality measuring section 158 and the multiplexing number control information outputted from multiplexing number determining section 201. Hereinafter, for ease of explanation, the modulation scheme alone, not including the coding rate, will be described.

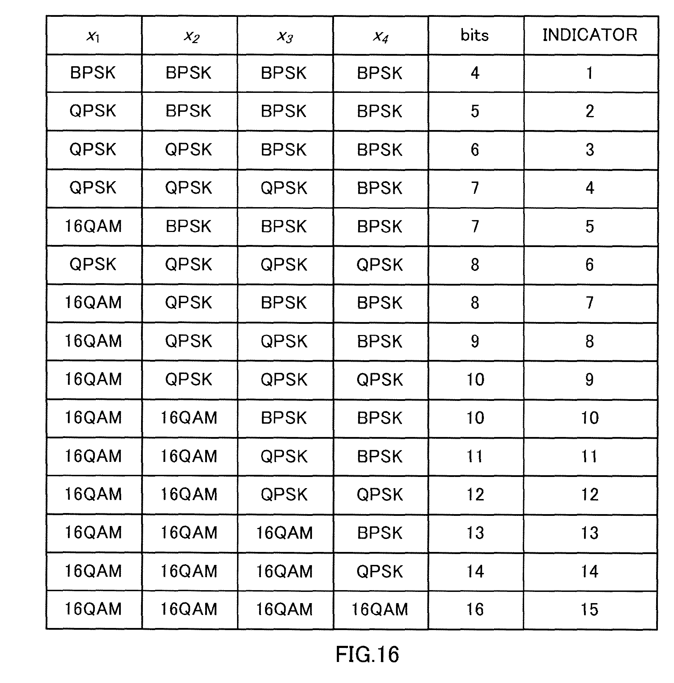

Here, when the modulation schemes applicable for base station 190 include BPSK, QPSK and 16QAM, and the number of multiplexing is four, MCS selecting section 202 selects an MCS from the MCS table as shown in FIG.16. MCS selecting section 202 outputs an indicator corresponding to the selected MCS (modulation scheme) to multiplex signal detecting section 203 and demodulating sections 162 to 164 and 204 asMCS information, and transmits the indicator to base station 190.

Multiplex signal detecting section 203 selects an MLD evaluation formula based on the received signal level of the signals outputted from signal demultiplexing section 157, performs maximum likelihood detection processing of detecting the combined signals combined at base station 190 using the selected MLD evaluation formula and the MCS information outputted from MCS selecting section 202 and acquires signals before combining as detected signals. When the number of multiplexing is four, multiplex signal detecting section 203 performs maximum likelihood detection processing twice. The acquired detected signals are outputted to demodulating sections 162 to 164 and 204.

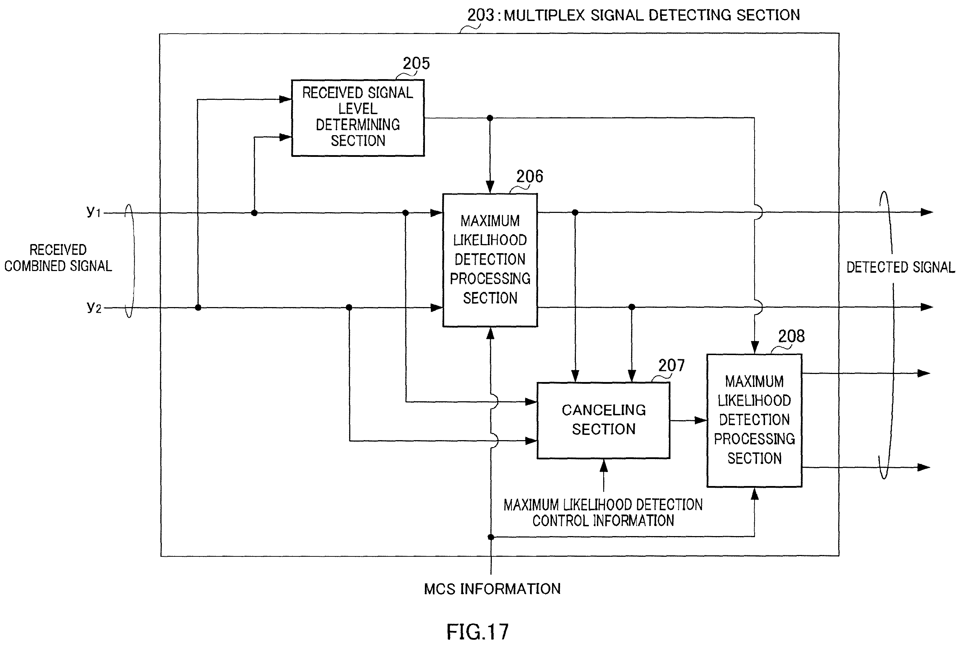

FIG.17 is a block diagram showing an internal configuration of multiplex signal detecting section 203 shown in FIG.14. Here, when the signals outputted from signal demultiplexing section 157 are received combined signals $y_1$ and $y_2$, and the noise power at receiving antennas is $n_1$ and $n_2$, received combined signals $y_1$ and $y_2$ can be expressed as follows using the transmission signals and the noise power.

[10]

$$y_1 = X_1 + n_1 = x_1 + x_2 + x_3 + n_1$$
$$y_2 = X_2 + n_2 = x_2 + x_3 + x_4 + n_2$$

... (Equation 10)

In FIG.17, received signal level determining section 205 determines MLD evaluation formulas at maximum likelihood detection processing sections 206 and 208 according to the received level of received combined signals $y_1$ and $y_2$ and generates maximum likelihood detection control information showing the determined evaluation formulas. The generated maximum likelihood detection control information is outputted to maximum likelihood detection processing sections 206 and 208.

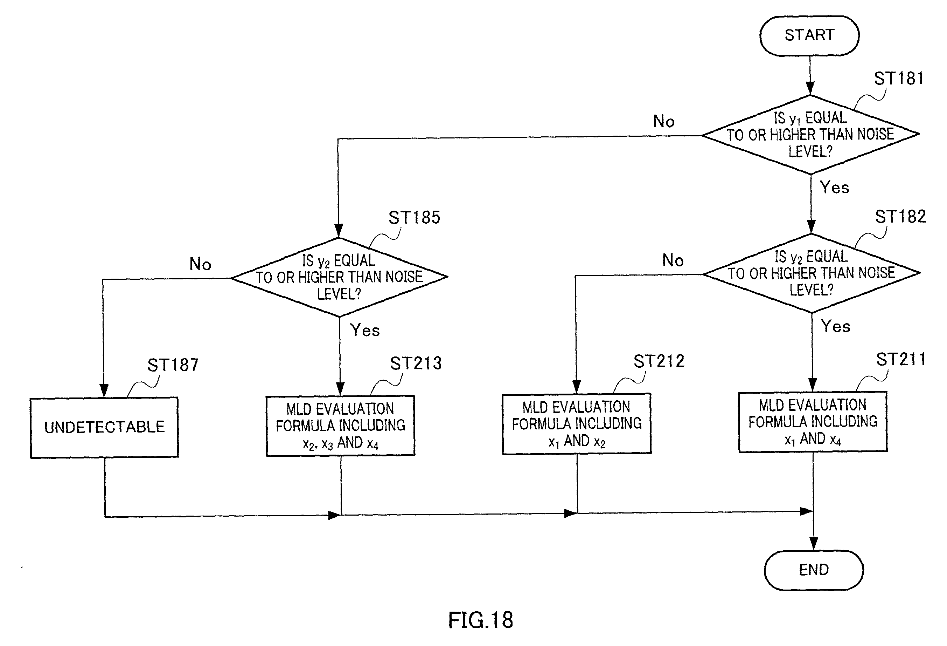

FIG. 18 is a flowchart illustrating a method for determining an MLD evaluation formula at received signal level determining section 205. The parts that are common with those in FIG.11 will be assigned the same reference numerals as FIG.11 without further explanations. In FIG.18, in ST211, an MLD evaluation formula including $x_1$ and $x_4$ is determined. In ST212, an MLD evaluation formula including $x_1$, $x_2$ and $x_3$ is determined. In ST213, an MLD evaluation formula including $x_2$, $x_3$ and $x_4$ is determined.

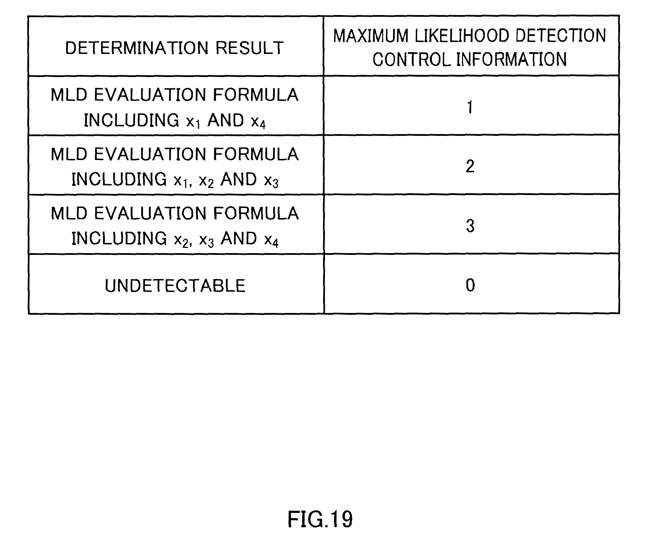

In this way, received signal level determining section 205 determines four cases, where both received combined signals $y_1$ and $y_2$ are equal to or higher than the noise level, where received combined signal $y_1$ is equal to or higher than the noise level, where received combined signal $y_2$ is equal to or higher than the noise level, and where the both received combined signals are lower than the noise level. Received signal level determining section 205 determines MLD evaluation formulas according to each of the above four cases, and outputs maximum likelihood detection control information showing the determined MLD evaluation formulas as shown in FIG.19 to maximum likelihood detection processing sections 206 and 208 and canceling section 207.

In this embodiment, three signals are combined ($x_1+x_2+x_3$ and $x_2+x_3+x_4$), and therefore, compared to Embodiment 1, signal power is less likely to fall substantially. Accordingly, cases rarely occur where the received SNR is good and nevertheless the received combined signals cannot be detected.

Maximum likelihood detection processing section 206 performs maximum likelihood detection (MLD) processing based on received combined signals $y_1$ and $y_2$, the MCS information and the maximum likelihood detection control information outputted from received signal level determining section 205 and detects transmission signals. The detected signals are outputted to canceling section 207 and outputted frommultiplex signal detecting section 203. The MLD processing according to maximum likelihood detection control information 1 to 3 shown in FIG.19 will be described below.

First, a case will be described where the maximum likelihood detection control information shows 1, that is, where an MLD evaluation formula including $x_1$ and $x_4$ is determined at received signal level determining section 205. In this case, the received signal levels of received combined signals $y_1$ and $y_2$ are both equal to or higher than the noise level, and therefore an MLD evaluation formula for $x_1$ and $x_4$ is generated by canceling $x_2$ and $x_3$ from equation 10. In this case, the MLD evaluation formula can be expressed as follows.

[11]

$$(x_1, x_4) = \arg\min_{x_1, x_{43}} \left| (y_1 - y_2) - (x'_1 - x'_4) \right|$$

... (Equation 11)

Maximum likelihood detection processing section 206 specifies a modulation scheme from the MCS information, generates replicas ($x'_1 - x'_4$) for all combinations of signal point constellation for ($x_1$-$x_4$), compares the generated replica with a difference between the received combined signals ($y_1$-$y_2$), and makes the combination of $x'_1$ and $x'_4$ that minimizes the difference between ($y_1$-$y_2$) and ($x_1$-$x_4$) a detected signal.

Next, a case will be described where the maximum likelihood detection control information shows 2, that is, where an MLD evaluation formula including $x_1$, $x_2$ and $x_3$ is determined at received signal level determining section 205. In this case, the received signal level of received combined signal $y_2$ is lower than the noise level, and therefore MLD processing is performed using received combined signal $y_1$ alone. In this case, the MLD evaluation formula can be expressed as follows.

[12]

$$(x_1, x_2, x_3) = \arg \min_{x_1, x_2, x_3} \left| y_1 - (x'_1 + x'_2 + x_3) \right| \qquad \ldots (\text{Equation 12})$$

Maximum likelihood detection processing section 206 specifies a modulation scheme from the MCS information, generates replicas $(x'_1 + x'_2 + x'_3)$ for all combinations of signal point constellation for $(x_1 + x_2 + x_3)$, compares the generated replicas with received combined signal $y_1$, and makes the combination of $x'_1$, $x'_2$ and $x'_3$ that minimizes the difference between $y_1$ and $(x'_1 + x'_2 + x'_3)$ a detected signal.

Next, a case will be described where the maximum likelihood detection control information shows 3, that is, where an MLD evaluation formula including $x_2$, $x_3$ and $x_4$ is determined at received signal level determining section 205. In this case, the received signal level of received combined signal $y_1$ is lower than the noise level, and therefore MLD processing is performed using received combined signal $y_2$ alone. Inthiscase, the MLD evaluation formula can be expressed as follows.

[13]

$$(x_2, x_3, x_4) = \arg \min_{x_2, x_3, x_4} \left| y_2 - (x'_2 + x'_3 + x'_4) \right| \qquad \ldots (\text{Equation 13})$$

Maximum likelihood detection processing section 206 specifies a modulation scheme from the MCS information, generates replicas $(x'_2 + x'_3 + x'_4)$ for all combinations of signal point constellation for $(x_2 + x_3 + x_4)$, compares the generated replicas with received combined signal $y_2$ and makes the combination of $x_2$, $x_3$ and $x_4$ that minimizes the difference between $y_2$ and $(x'_2 + x'_3 + x'_4)$ a detected signal.

In addition, FIG.17 shows a case where maximum likelihood detection processing section 206 detects two signals when the maximum likelihood detection control information shows 1. However, when the maximum likelihood detection control information shows 2 or 3, maximum likelihood detection processing section 206 detects three signals and therefore maximum likelihood detection processing section 208 detects no signal.

With any of above-described maximum likelihood detection control information 1 to 3, when the received combined signals in the MLD evaluation formula employ the same modulation scheme, the signal points in constellation overlap, and detection errors of transmission signals are likely to occur. However, by performing power control or phase rotation at the transmitting side, it is possible to make detection errors less likely to occur.

Canceling section 207 detects the signal canceled at maximum likelihood detection processing section 206 using the received combined signals and the detected signal outputted from maximum likelihood detection processing section 206. However, when the maximum likelihood detection control information outputted from received signal level determining section 205 is information other than 1, canceling section 207 does not operate. The processing of canceling section 207 when the maximum likelihood detection control information shows 1 will be described below.

The received combined signals and $x_1$ and $x_4$ detected at maximum likelihood detection processing section 206 are known information, and therefore $x_2$ and $x_3$ can be expressed as follows from equation 10.

[14]

$$x_2 + x_3 = y_1 - x_1$$
$$x_2 + x_3 = y_2 - x_4$$
$$\qquad \ldots (\text{Equation 14})$$

Accordingly, a combined signal of $x_2$ and $x_3$ can be detected by canceling detected signals $x_1$ and $x_4$ from received combined signals $y_1$ and $y_2$. The detected combined signal where gain is produced as expressed below is outputted to maximum likelihood detection processing section 208.

[15]

$$2(x_2 + x_3) = (y_1 + y_2) - (x_1 + x_4) \qquad \ldots (\text{Equation 15})$$

Maximum likelihood detection processing section 208 performs maximum likelihood detection processing and detects transmission signals based on the combined signal which is outputted from canceling section 207 and expressed in above equation 15, MCS information and the maximum likelihood detection control information outputted from received signal level determining section 205. In this case, the MLD evaluation formula can be expressed as follows. However, when the maximum likelihood detection control information is information other than 1, maximum likelihood detection processing section 208 does not operate as with canceling section 207.

[16]

$$(x_1, x_3) = \arg \min_{x_2, x_3} \left| \{(y_1 + y_2) - (x_1 + x_4)\} - 2(x'_2 + x'_3) \right| \qquad \dots (\text{Equation } 16)$$

As expressed in equation 16, maximum likelihood detection processing section 208 specifies modulation schemes of $x_2$ and $x_3$ from the MCS information, generates replicas $(x'_2 + x'_3)$ for all combinations of signal point constellation for $(x_2 + x_3)$, compares the generated replicas with $(y_1 + y_2) - (x_1 + x_4)$, and makes the combination of $x'_2$ and $x'_3$ that minimizes the difference a detected signal.

At maximum likelihood detection processing section 208 as well as maximum likelihood detection processing section 206, the signal points in constellation overlap, and detection errors of transmission signals are likely to occur, but by performing power control or phase rotation at the transmitting side, it is possible to make detection errors less likely to occur.

In this embodiment, a case has been described where multiplexing of "the number of transmitting antennas + 2" is realized, but the present invention is not limited to this, and it is also possible to realize multiplexing of "the number of transmitting antennas + 2" or more. In this case, maximum likelihood detection processing and canceling processing are performed as appropriate according to the number of multiplexing.

In this way, according to Embodiment 2, by performing maximum likelihood detection processing and canceling processing according to the number of multiplexing, the signals multiplexed at "the number of transmitting antennas + 2" or more can be demodulated, so that it is possible to further improve the data rate. Further, by combining more signals, it is possible to avoid a substantial fall of a signal level at the receiving side and improve reception characteristics.

In addition, in this embodiment, data transmission from base station 190 to mobile station 200 is assumed, but the present invention can be similarly applied to data transmission from mobile station 200 to base station 190.

Further, in this embodiment, a case has been described where multiplexing of "the number of transmitting antennas + 2" or more is realized in a 2×2 MIMO system, but it is also possible to realize multiplexing of "the number of transmitting antennas + 2" or more in a 3×3 MIMO system using the same method.

Furthermore, in this embodiment, a case has been described where four transmission signals are transmitted in a 2×2 MIMO system, but it is also possible to realize multiplexing of "the number of transmitting antennas + 2" or more in a MIMO system where the number of antennas varies between the transmitting side and the receiving side such as in Double-STTD. In a configuration of a 4×2 MIMO system which is a typical system of Double-STTD, when six transmission signals are transmitted, for example, four combined signals $X_1$, $X_2$, $X_3$ and $X_4$ are generated from six transmission signals $x_1$ to $x_6$ and transmitted from transmitting antennas. In this case, $X_1$, $X_2$, $X_3$ and $X_4$ can be expressed as follows.

[17]

$$\begin{cases} X_1 = x_1 + x_2 \\ X_2 = x_2 + x_3 \end{cases}$$
$$\begin{cases} X_3 = x_4 + x_5 \\ X_4 = x_5 + x_6 \end{cases} \qquad \dots (\text{Equation } 17)$$

(Embodiment 3)

In Embodiment 3 of the present invention, as with Embodiment 1, a 2×2 MIMO system is assumed where the number of transmitting antennas is two, the number of receiving antennas is two, and three transmission signals $x_1$, $x_2$ and $x_3$ are multiplexed.

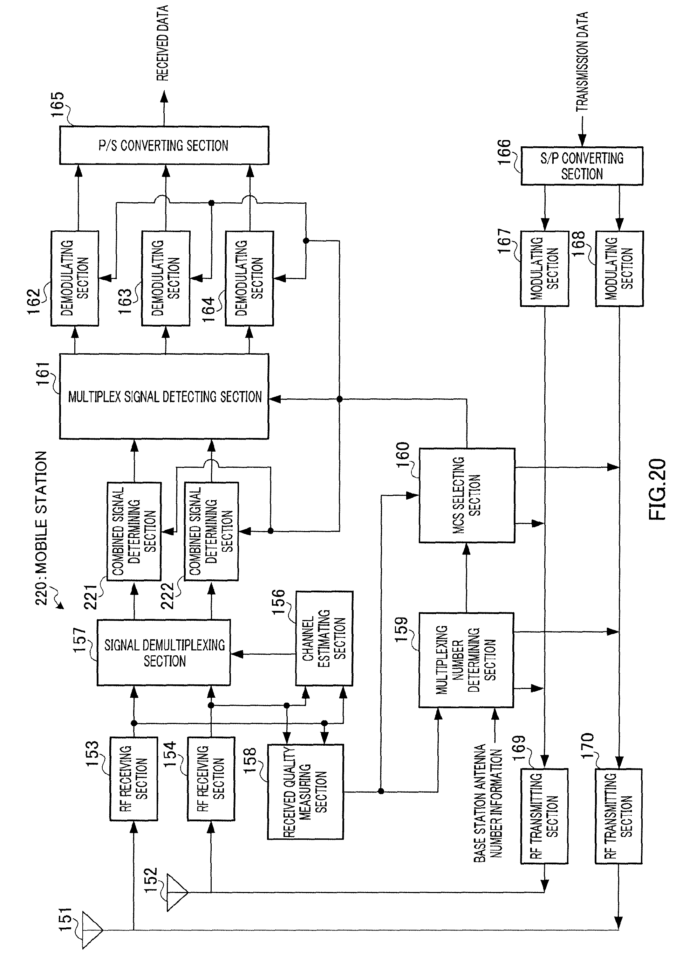

FIG.20 is a block diagram showing a configuration of mobile station 220 according to Embodiment 3 of the present invention. In this figure, combined signal determining sections 221 and 222 determine the signal points for the received combined signals outputted from signal demultiplexing section 157, based on MCS information outputted from MCS selecting section 160.

When a combined signal is incompletely demultiplexed by signal demultiplexing section 157, or, when noise power is large, detection accuracy may be influenced at multiplex signal detecting section 161. Therefore, by determining signal points for the received combined signals and specifying combinations of the signals, it is possible to improve the detection accuracy of multiplex signal detecting section 161.

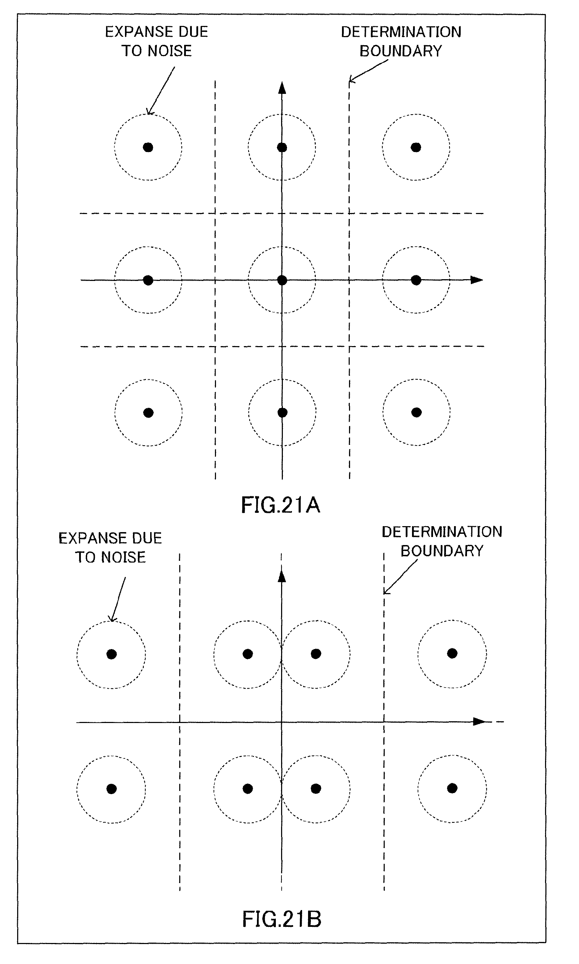

Received combined signals $y_1$ and $y_2$ demultiplexed at signal demultiplexing section 157 can be expressed by above equation 2. When the modulation scheme for $x_1$ is QPSK, the modulation scheme for $x_2$ is QPSK and the modulation scheme for $x_3$ is BPSK, the signal point constellation for combined signal $y_1$ is as shown in FIG.21A, and the signal point constellation for combined signal $y_2$ is as shown in FIG.21B.

The received combined signals outputted from signal demultiplexing section 157 are observed at positions (in the figure, circles showing an expanse due to noise) distant from the proper signal points of the combined signals due to the influence of noise or interference, but by distinguishing between these received combined signals using a determination boundary, the proper signal points are specified. The specified received combined signals are outputted to multiplex signal detecting section 161.

Although there are overlapping signal points in FIG.21A, combined signal determining sections 221 and 222 do not specify combined transmission signals $x_1$, $x_2$ and $x_3$, separately, but specify the combinations of combined signals $x_1+x_2$ and $x_2+x_3$, and therefore there is no influence of overlapping of the signal points.

In this way, according to Embodiment 3, even when the received SNR of a combined signal is low or when the signal is incompletely demultiplexed and interference components remain, the combined signal where noise and interference are eliminated can be specified by determining signal points of the combined signal, so that it is possible to improve the detection accuracy of transmission signals in the maximum likelihood detection processing and improve received quality.

(Embodiment 4)

In Embodiment 4 of the present invention, as in Embodiment 1, a 2×2 MIMO system is assumed where the number of transmitting antennas is two, the number of receiving antennas is two, and it is assumed that three transmission signals $x_1$, $x_2$ and $x_3$ are multiplexed in the 2x2 MIMO system.

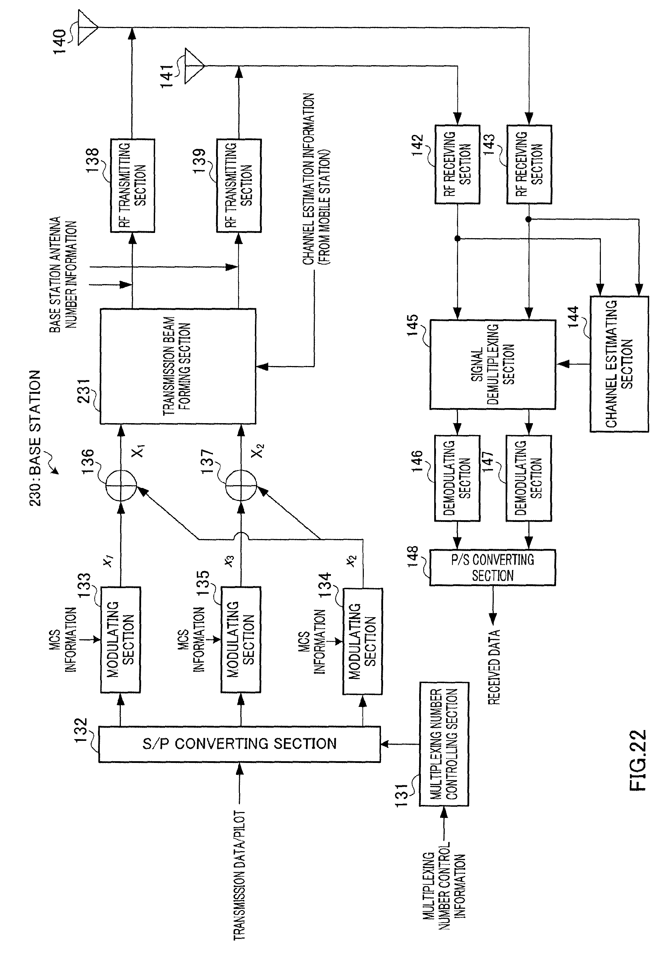

FIG.22 is a block diagram showing a configuration of base station 230 according to Embodiment 4 of the present invention. Transmission beam forming section 231 acquires channel estimation information transmitted (fed back) from the mobile station, generates a transmission weight based on the acquired channel estimation information and multiplies the combined signals by the generated transmission weight. Combined signals $X_1$ and $X_2$ can be expressed by above equation 1.

Next, the operation processing in transmission beam forming section 231 will be described. First, transmission weight matrix W is obtained by performing eigenvalue decomposition of correlation matrix $H^H H$ of channel estimation information H. The eigenvalue decomposition is performed as follows.

[18]

$$H^H H = EDE^H \qquad \text{...(Equation 18)}$$

Here, $^H$ (superscript H) indicates the Hermitian conjugate. E is a unitary matrix comprised of eigenvectors, and D is diagonal matrix $D=\text{diag}[\lambda_1, \lambda_2]$, comprised of eigenvalues $\lambda_1$ and $\lambda_2$. Further, transmission weight matrix W=E. When the elements of transmission weight matrix are $w_1$ to $w_4$, combined signals $X'_1$ and $X'_2$ multiplied by weight at transmission beam forming section 231 can be expressed as follows.

[19]

$$\begin{bmatrix} X'_1 \\ X'_2 \end{bmatrix} = W \begin{bmatrix} X_1 \\ X_2 \end{bmatrix} = \begin{bmatrix} w_1 & w_2 \\ w_3 & w_4 \end{bmatrix} \begin{bmatrix} X_1 \\ X_2 \end{bmatrix} = \begin{bmatrix} w_1 X_1 + w_2 X_2 \\ w_3 X_1 + w_4 X_2 \end{bmatrix} \qquad \text{...(Equation 19)}$$

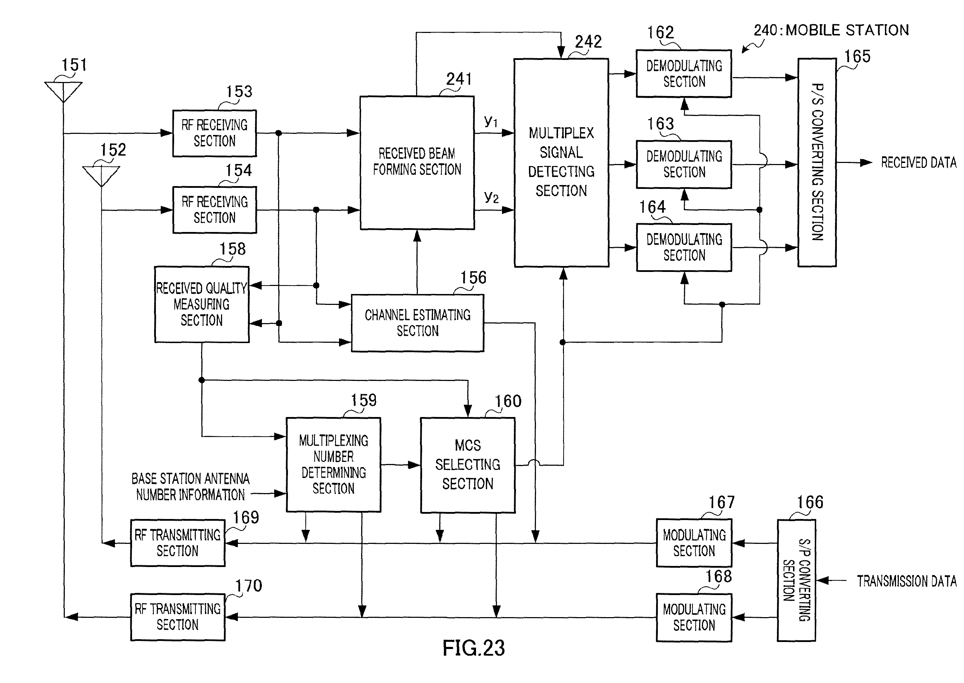

FIG.23 is a block diagram showing a configuration of mobile station 240 according to Embodiment 4 of the present invention. In this figure, channel estimating section 156 performs channel estimation based on the pilot signals outputted from RF receiving sections 153 and 154, outputs the estimated value as channel estimation information to received beam forming section 241 and transmits the estimated value to base station 230.

Received beam forming section 241 generates a reception weight based on the channel estimation information outputted from channel estimating section 156, and demultiplexes the received signals outputted from RF receiving sections 153 and 154 using the generated reception weight.

Next, the operation processing at received beam forming section 241 will be described. First, by performing eigenvalue decomposition of correlation matrix $H^H H$ of channel estimation information H, unitary matrix E comprised of eigenvectors can be obtained. Reception weight matrix V can be expressed as follows using channel estimation information H and unitary matrix E.

[20]

$$V = (HE)^H \qquad \dots(\text{Equation } 20)$$

Received beam forming section 241 multiplies the received signals by reception weight matrix V calculated by above equation 20, thereby demultiplexing the signals and detecting received combined signals. When the received signals at antennas are $r_1$ and $r_2$, the elements of received weight matrix V are $v_1$ to $v_4$ and noise power at receiving antennas are $n_1$ and $n_2$, signal demultiplexing outputs (received combined signals) $y_1$ and $y_2$ at received beam forming section 241 can be expressed as follows.

[21]

$$\begin{bmatrix} y_1 \\ y_2 \end{bmatrix} = V\begin{bmatrix} r_1 \\ r_2 \end{bmatrix} = \begin{bmatrix} v_1 & v_2 \\ v_3 & v_4 \end{bmatrix}\begin{bmatrix} r_1 \\ r_2 \end{bmatrix} = \begin{bmatrix} \lambda_1 X_1 + n_1 \\ \lambda_2 X_2 + n_2 \end{bmatrix} = \begin{bmatrix} \lambda_1(x_1 + x_2) + n_1 \\ \lambda_2(x_2 + x_3) + n_2 \end{bmatrix}$$

$$\dots(\text{Equation } 21)$$

The received combined signals obtained in this way and eigenvalue information ($\lambda_1$, $\lambda_2$) obtained as a result of eigenvalue decomposition are outputted to multiplex signal detecting section 242.

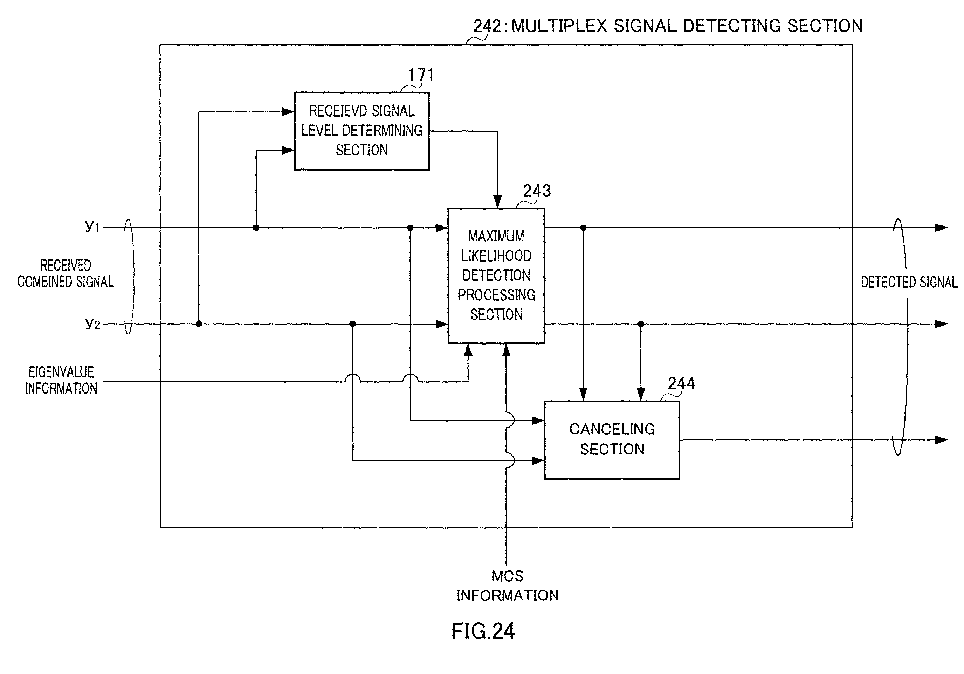

FIG.24 is a block diagram showing an internal configuration of multiplex signal detecting section 242 shown in FIG.23. In this figure, maximum likelihood detection processing section 243 performs maximum likelihood detection processing and detects transmission signals based on received combined signals $y_1$ and $y_2$, eigenvalue information, MCS information, and maximum likelihood detection control information outputted from received signal level determining section 171. The maximum likelihood detection control information is the same as that shown in FIG.12. The detected signals are outputted to canceling section 244 and outputted from multiplex signal detecting section 242. The MLD processing according to maximum likelihood detection control information 1 to 3 shown in FIG. 12 will be described below.

First, when the maximum likelihood detection control information shows 1, received combined signals $y_1$ and $y_2$ are both equal to or higher than the noise level, and therefore an MLD evaluation formula for $x_1$ and $x_3$ is generated by canceling $x_2$ from equation 21. In this case, the MLD evaluation formula can be expressed as follows.

[22]

$$(x_1, x_3) = \arg\min_{x_1, x_3} \left| (y_1 - \frac{\lambda_1}{\lambda_2} y_2) - \lambda_1(x'_1 - x'_3) \right| \qquad \dots(\text{Equation } 22)$$

Maximum likelihood detection processing section 243 specifies the modulation scheme from the MCS information, generates replicas ($x'_1$-$x'_3$) for all combinations of signal point constellation for ($x_1$-$x_3$), compares the generated replicas with a difference ($y_1$-$\lambda_1 y_2/\lambda_2$) between the received combined signals including eigenvalues, and makes the combination of $x'_1$ and $x'_3$ that minimizes the difference between ($y_1$-$\lambda_1 y_2/\lambda_2$) and $\lambda_1(x'_1$-$x'_3$) a detected signal.

Next, when the maximum likelihood detection control information shows 2, the received signal level of received combined signal $y_2$ is lower than the noise level, and therefore MLD processing is performed using received combined signal $y_1$ alone. In this case, the MLD evaluation formula can be expressed as follows.

[23]

$$(x_1, x_2) = \arg\min_{x_1, x_2} \left| y_1 - \lambda_1(x'_1 + x'_2) \right| \qquad \text{...(Equation 23)}$$

Maximum likelihood detection processing section 243 specifies a modulation scheme from the MCS information, generates replicas $(x'_1 + x'_2)$ for all combinations of signal point constellation for $(x_1 + x_2)$, compares the generated replicas with received combined signal $y_1$, and makes the combination of $x'_1$ and $x'_2$ that minimizes the difference between $y_1$ and $\lambda_1(x'_1 + x'_2)$ a detected signal.

Further, when the MCS information specifies that $x_2$ and $x_3$ employ the same modulation scheme, the level of received combined signal $y_2$ may fall because of the signals being combined out of phase. For example, when the modulation schemes of $x_2$ and $x_3$ are both QPSK, the combined signal of baseband signals $x_2=1+j$ and $x_3=-1-j$ becomes $x_2+x_3=0$. In this case, $x_2=-x_3$, and therefore $x_3$ can be derived using $x_2$ detected by equation 23.

Next, when the maximum likelihood detection control information shows 3, the received signal level of received combined signal $y_1$ is lower than the noise level, and therefore MLD processing is performed using received combined signal $y_2$ alone. In this case, the MLD evaluation formula can be expressed as follows.

[24]

$$(x_2, x_3) = \arg\min_{x_2, x_3} \left| y_2 - \lambda_2(x'_2 + x'_3) \right| \qquad \text{...(Equation 24)}$$

Maximum likelihood detection processing section 243 specifies a modulation scheme from the MCS information, generates replicas $(x'_2 + x'_3)$ for all combinations of signal point constellation for $(x_2 + x_3)$, compares the generated replicas with received combined signal $y_2$, and makes the combination of $x'_2$ and $x'_3$ that minimizes the difference between $y_2$ and $\lambda_2(x'_2 + x'_3)$ a detected signal.

Canceling section 244 detects the signal canceled at maximum likelihood detection processing section 243 using the received combined signals and the detected signal outputted from maximum likelihood detection processing section 243. The processing of canceling section 244 when the maximum likelihood detection control information shows 1 will be described below.

The received combined signals, and $x_1$ and $x_3$ detected at maximum likelihood detection processing section 243 are known information, and therefore $x_2$ can be expressed as follows by equation 21.

[25]

$$\begin{aligned} \lambda_1 x_2 &= y_1 - \lambda_1 x_1 \\ \lambda_2 x_2 &= y_2 - \lambda_2 x_3 \end{aligned} \qquad \text{...(Equation 25)}$$

Accordingly, $x_2$ can be calculated by canceling the value obtained by multiplying detected signals $x_1$ and $x_3$ by eigenvalues $\lambda_1$ and $\lambda_2$ from received combined signals $y_1$ and $y_2$. In this case, as shown below, gain is produced with respect to $x_2$ by combining the two equations of equation 25.

[26]

$$(\lambda_1 + \lambda_2)x_2 = (y_1 + y_2) - (\lambda_1 x_1 + \lambda_2 x_3) \qquad \text{...(Equation 26)}$$

In this way, according to Embodiment 4, the combined signals are apparently received without any interference by performing transmission and received beam forming, so that it is possible to improve the detection accuracy of transmission signals in maximum likelihood detection processing. Further, the signal canceled by maximum likelihood detection processing can be detected with further improved gain, so that it is possible to improve received quality.

The embodiments of the present invention have been described.

The transmitting apparatus, receiving apparatus and communication method according to the present invention are not limited to the above-described embodiments and can be implemented by making various modifications. For example, the embodiments can be appropriately combined and implemented.

The transmitting apparatus and receiving apparatus according to the present invention can be provided to a communication terminal apparatus and base station apparatus in a mobile communication system, so that it is possible to provide a communication terminal apparatus, base station apparatus and mobile communication system that have the same operation effect as described above.

Furthermore, although a case has been described as an example where the present invention is implemented with hardware, the present invention can be implemented with software. For example, by describing the communication method algorithm according to the present invention in a programming language, storing this program in a memory and making an information processing section execute this program, it is possible to implement the same function as the transmitting apparatus and receiving apparatus according to the present invention.

Furthermore, each function block used to explain the above-described embodiments is typically implemented as an LSI constituted by an integrated circuit. These may be individual chips or may partially or totally contained on a single chip.

Furthermore, here, each function block is described as an LSI, but this may also be referred to as "IC", "system LSI", "super LSI", "ultra LSI" depending on differing extents of integration.

Further, the method of circuit integration is not limited to LSI' s, and implementation using dedicated circuitry or general purpose processors is also possible. After LSI manufacture, utilization of a programmable FPGA (Field Programmable Gate Array) or a reconfigurable processor in which connections and settings of circuit cells within an LSI can be reconfigured is also possible.

Further, if integrated circuit technology comes out to replace LSI's as a result of the development of semiconductor technology or a derivative other technology, it is naturally also possible to carry out function block integration using this technology. Application of biotechnology is also possible.

The present application is based on Japanese Patent Application No.2005-191481, filed on June 30, 2005, the entire content of which is expressly incorporated by reference herein.

Industrial Applicability

The transmitting apparatus, receiving apparatus and communication method according to the present invention provides an advantage of improving a data rate in a MIMO system and can be applied to a communication terminal apparatus, base station apparatus and the like.

**Claims**

1. A transmitting apparatus comprising:

   a plurality of transmitting antennas;
   a multiplexing section that multiplexes transmission signals with a number of multiplexing equal to or larger than a number of the transmitting antennas by combining a first transmission signal with a second transmission signal and combining the first transmission signal with a third transmission signal different from the first transmission signal; and
   a transmitting section that transmits the multiplexed transmission signals from the plurality of transmitting antennas.

2. The transmitting apparatus according to claim 1, further comprising:

   a multiplexing number controlling section that controls the number of multiplexing of the transmission signals; and
   a converting section that converts the transmission signals of a single series to transmission signals of the same number of a plurality of series as the number of multiplexing controlled at the multiplexing number controlling section.

3. The transmitting apparatus according to claim 1, further comprising a transmission beam forming section that multiplies the transmission signals combined by the multiplexing section by a transmission weight.

4.  Abase station apparatus comprising the transmitting apparatus according to claim 1.

5.  A mobile station apparatus comprising the transmitting apparatus according to claim 1.

6.  A receiving apparatus comprising:

    a plurality of receiving antennas;
    a demultiplexing section that extracts received combined signals combining a first transmission signal with a second transmission signal and combining the first transmission signal with a third transmission signal different from the first transmission signal by demultiplexing received signals received at the plurality of receiving antennas; and
    a detecting section that cancels the first transmission signal, detects the second transmission signal and third transmission signal from the received combined signals and restores the canceled first transmission signal using the detected second transmission signal and third transmission signal.

7.  The receiving apparatus according to claim 6, wherein, when the received combined signals have a signal level equal to or higher than a predetermined threshold, the detecting section detects the second transmission signal and third transmission signal, and restores the first transmission signal.

8.  The receiving apparatus according to claim 6, wherein the detecting section cancels the first transmission signal by performing maximum likelihood detection processing on the received combined signals and detects the second transmission signal and third transmission signal.

9.  The receiving apparatus according to claim 6, further comprising a determining section that determines signal points for the received combined signals, wherein the detecting section detects the second transmission signal and third transmission signal, and restores the first transmission signal based on the signal points determined by the determining section.

10. A base station apparatus comprising the receiving apparatus according to claim 6.

11. A mobile station apparatus comprising the receiving apparatus according to claim 6.

12. A communication method comprising the steps of:

    multiplexing transmission signals with a number of multiplexing equal to or larger than a number of transmitting antennas by combining a first transmission signal with a second transmission signal and combining the first transmission signal with a third transmission signal different from the first transmission signal;
    transmitting the multiplexed transmission signals from a plurality of transmitting antennas;
    extracting received combined signals combining the first transmission signal with the second transmission signal and combining the first transmission signal with the third transmission signal by demultiplexing received signals received at a plurality of receiving antennas; and
    canceling the first transmission signal, detecting the second transmission signal and third transmission signal from the received combined signals and restoring the canceled first transmission signal using the detected second transmission signal and third transmission signal.

13. A communication system comprising:

    a transmitting apparatus that comprises:

        a plurality of transmitting antennas;
        a multiplexing section that multiplexes transmission signals with a number of multiplexing equal to or larger than a number of the transmitting antennas by combining a first transmission signal with a second transmission signal and combining the first transmission signal with a third transmission signal different from the first transmission signal; and
        a transmitting section that transmits the multiplexed transmission signals from the plurality of transmitting antennas; and

a receiving apparatus that comprises:

a plurality of receiving antennas;

a demultiplexing section that extracts received combined signals combining the first transmission signal with the second transmission signal and combining the first transmission signal with the third transmission signal by demultiplexing received signals received at the plurality of receiving antennas; and

a detecting section that cancels the first transmission signal, detects the second transmission signal and third transmission signal from the received combined signals and restores the canceled first transmission signal using the detected second transmission signal and third transmission signal.

EP 1 898 545 A1

$X_1$

$X_2$

SIGNAL DEMULTIPLEXING PROCESSING

$X_1$

$X_2$

PRIOR ART

FIG.1

FIG.2

BASE STATION                                    MOBILE STATION

ST111 TRANSMIT PILOT AND ANTENNA NUMBER INFORMATION

MEASURE RECEIVED QUALITY — ST112

DETERMINE THE NUMBER OF MULTIPLEXING — ST113

SELECT MCS — ST114

ST115 TRANSMIT MULTIPLEXING NUMBER CONTROL INFORMATION AND MCS INFORMATION

GENERATE TRANSMISSION SIGNAL — ST116

ST117 TRANSMIT PILOT AND DATA

CHANNEL ESTIMATION — ST118

DEMULTIPLEXED SIGNAL — ST119

DETECT MULTIPLEX SIGNAL — ST120

FIG.3

FIG.4

SIGNAL POINT CONSTELLATION
FOR $x_1$
(QPSK)

SIGNAL POINT
CONSTELLATION FOR $x_2$
(QPSK)

SIGNAL POINT CONSTELLATION FOR
COMBINED SIGNAL $X_1$
(QPSK+QPSK)

FIG.5A

EP 1 898 545 A1

SIGNAL POINT
CONSTELLATION FOR $x_2$
(QPSK)

SIGNAL POINT
CONSTELLATION FOR $x_3$
(BPSK)

SIGNAL POINT CONSTELLATION
FOR COMBINED SIGNAL $X_2$
(QPSK+BPSK)

FIG.5B

FIG.6

EP 1 898 545 A1

FIG.7

EP 1 898 545 A1

| $x_1$ | $x_2$ | bits | INDICATOR |
|-------|-------|------|-----------|
| BPSK | BPSK | 2 | 1 |
| QPSK | BPSK | 3 | 2 |
| QPSK | QPSK | 4 | 3 |
| 16QAM | BPSK | 5 | 4 |
| 16QAM | QPSK | 6 | 5 |
| 16QAM | 16QAM | 8 | 6 |

FIG.8

EP 1 898 545 A1

| $x_1$ | $x_2$ | $x_3$ | bits | INDICATOR |
|-------|-------|-------|------|-----------|
| BPSK | BPSK | BPSK | 3 | 1 |
| QPSK | BPSK | BPSK | 4 | 2 |
| QPSK | QPSK | BPSK | 5 | 3 |
| QPSK | QPSK | QPSK | 6 | 4 |
| 16QAM | BPSK | BPSK | 6 | 5 |
| 16QAM | QPSK | BPSK | 7 | 6 |
| 16QAM | QPSK | QPSK | 8 | 7 |
| 16QAM | 16QAM | BPSK | 9 | 8 |
| 16QAM | 16QAM | QPSK | 10 | 9 |
| 16QAM | 16QAM | 16QAM | 12 | 10 |

FIG.9

FIG.10

EP 1 898 545 A1

START

ST181

IS $y_1$ EQUAL TO OR HIGHER THAN NOISE LEVEL?

No

Yes

ST185

IS $y_2$ EQUAL TO OR HIGHER THAN NOISE LEVEL?

No

Yes

ST182

IS $y_2$ EQUAL TO OR HIGHER THAN NOISE LEVEL?

No

Yes

ST187

UNDETECTABLE

ST186

MLD EVALUATION FORMULA INCLUDING $x_2$ AND $x_3$

ST184

MLD EVALUATION FORMULA INCLUDING $x_1$ AND $x_2$

ST183

MLD EVALUATION FORMULA INCLUDING $x_1$ AND $x_3$

END

FIG.11

| DETERMINATION RESULT | MAXIMUM LIKELIHOOD DETECTION CONTROL INFORMATION |
|---|---|
| MLD EVALUATION FORMULA INCLUDING $x_1$ AND $x_3$ | 1 |
| MLD EVALUATION FORMULA INCLUDING $x_1$ AND $x_2$ | 2 |
| MLD EVALUATION FORMULA INCLUDING $x_2$ AND $x_3$ | 3 |
| UNDETECTABLE | 0 |

FIG.12

EP 1 898 545 A1

FIG.13

FIG.14

EP 1 898 545 A1

FIG.15

EP 1 898 545 A1

| $x_1$ | $x_2$ | $x_3$ | $x_4$ | bits | INDICATOR |
|---|---|---|---|---|---|
| BPSK | BPSK | BPSK | BPSK | 4 | 1 |
| QPSK | BPSK | BPSK | BPSK | 5 | 2 |
| QPSK | QPSK | BPSK | BPSK | 6 | 3 |
| QPSK | QPSK | QPSK | BPSK | 7 | 4 |
| 16QAM | BPSK | BPSK | BPSK | 7 | 5 |
| QPSK | QPSK | QPSK | QPSK | 8 | 6 |
| 16QAM | QPSK | BPSK | BPSK | 8 | 7 |
| 16QAM | QPSK | QPSK | BPSK | 9 | 8 |
| 16QAM | QPSK | QPSK | QPSK | 10 | 9 |
| 16QAM | 16QAM | BPSK | BPSK | 10 | 10 |
| 16QAM | 16QAM | QPSK | BPSK | 11 | 11 |
| 16QAM | 16QAM | QPSK | QPSK | 12 | 12 |
| 16QAM | 16QAM | 16QAM | BPSK | 13 | 13 |
| 16QAM | 16QAM | 16QAM | QPSK | 14 | 14 |
| 16QAM | 16QAM | 16QAM | 16QAM | 16 | 15 |

FIG.16

205

RECEIVED SIGNAL
LEVEL
DETERMINING
SECTION

206

MAXIMUM
LIKELIHOOD
DETECTION
PROCESSING
SECTION

$y_1$

$y_2$

RECEIVED
COMBINED SIGNAL

DETECTED SIGNAL

207

CANCELING
SECTION

208

MAXIMUM
LIKELIHOOD
DETECTION
PROCESSING
SECTION

MAXIMUM LIKELIHOOD DETECTION
CONTROL INFORMATION

MCS INFORMATION

FIG.17

EP 1 898 545 A1

37

EP 1 898 545 A1

START

ST181
IS $y_1$ EQUAL TO OR HIGHER THAN NOISE LEVEL?

No

Yes

ST185
IS $y_2$ EQUAL TO OR HIGHER THAN NOISE LEVEL?

No

Yes

ST182
IS $y_2$ EQUAL TO OR HIGHER THAN NOISE LEVEL?

No

Yes

ST187
UNDETECTABLE

ST213
MLD EVALUATION FORMULA INCLUDING $x_2$, $x_3$ AND $x_4$

ST212
MLD EVALUATION FORMULA INCLUDING $x_1$ AND $x_2$

ST211
MLD EVALUATION FORMULA INCLUDING $x_1$ AND $x_4$

END

FIG.18

| DETERMINATION RESULT | MAXIMUM LIKELIHOOD DETECTION CONTROL INFORMATION |
|---|---|
| MLD EVALUATION FORMULA INCLUDING $x_1$ AND $x_4$ | 1 |
| MLD EVALUATION FORMULA INCLUDING $x_1$, $x_2$ AND $x_3$ | 2 |
| MLD EVALUATION FORMULA INCLUDING $x_2$, $x_3$ AND $x_4$ | 3 |
| UNDETECTABLE | 0 |

FIG.19

EP 1 898 545 A1

FIG.20

EP 1 898 545 A1

FIG.21A

FIG.21B

FIG.22

FIG.23 — Block diagram (240: MOBILE STATION)

- P/S CONVERTING SECTION (165) → RECEIVED DATA
- DEMODULATING SECTION (162)
- DEMODULATING SECTION (163)
- DEMODULATING SECTION (164)
- MULTIPLEX SIGNAL DETECTING SECTION (242)
- RECEIVED BEAM FORMING SECTION (241), signals $y_1$, $y_2$
- CHANNEL ESTIMATING SECTION (156)
- RF RECEIVING SECTION (153)
- RF RECEIVING SECTION (154)
- RECEIVED QUALITY MEASURING SECTION (158)
- MCS SELECTING SECTION (160)
- MULTIPLEXING NUMBER DETERMINING SECTION (159)
- BASE STATION ANTENNA NUMBER INFORMATION
- RF TRANSMITTING SECTION (169)
- RF TRANSMITTING SECTION (170)
- S/P CONVERTING SECTION (166) ← TRANSMISSION DATA
- MODULATING SECTION (167)
- MODULATING SECTION (168)
- Antenna 151
- Antenna 152

FIG.23

242: MULTIPLEX SIGNAL DETECTING SECTION

171

RECEIEVD SIGNAL
LEVEL DETERMINING
SECTION

243

MAXIMUM
LIKELIHOOD
DETECTION
PROCESSING
SECTION

$y_1$

RECEIVED
COMBINED SIGNAL

DETECTED SIGNAL

$y_2$

EIGENVALUE
INFORMATION

244

CANCELING
SECTION

MCS
INFORMATION

FIG.24

EP 1 898 545 A1

44

## INTERNATIONAL SEARCH REPORT

| International application No. |
| --- |
| PCT/JP2006/312916 |

A. CLASSIFICATION OF SUBJECT MATTER
*H04J15/00*(2006.01)i, *H04B7/06*(2006.01)i, *H04B7/26*(2006.01)i

According to International Patent Classification (IPC) or to both national classification and IPC

B. FIELDS SEARCHED

Minimum documentation searched (classification system followed by classification symbols)
H04J15/00, H04B7/06, H04B7/26

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
IEEE

C. DOCUMENTS CONSIDERED TO BE RELEVANT

| Category* | Citation of document, with indication, where appropriate, of the relevant passages | Relevant to claim No. |
| --- | --- | --- |
| A | JP 07-183829 A (NEC Corp.), 21 July, 1995 (21.07.95), Full text; all drawings & US 6363100 B1 | 1-13 |
| A | JP 2005-073221 A (Matsushita Electric Industrial Co., Ltd.), 17 March, 2005 (17.03.05), Par. Nos. [0147] to [0170]; Figs. 27, 30 to 35 & EP 1641164 A1 & JP 2006-129529 A & WO 2005/015799 A1 | 1-13 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 09 August, 2006 (09.08.06) | Date of mailing of the international search report 22 August, 2006 (22.08.06) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| | International application No. |
|---|---|
| | PCT/JP2006/312916 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-307671 A  (Fujitsu Ltd.),<br>02 November, 2000 (02.11.00),<br>Par. Nos. [0014] to [0042]; Figs. 1, 2<br>& EP 552034 A3          & US 5710754 A<br>& US 6226302 B1        & US 6282237 B1<br>& US 6298036 B1        & EP 552034 B1<br>& DE 69332849 E        & JP 11-261537 A<br>& JP 11-261538 A       & JP 11-261539 A<br>& JP 11-261540 A       & JP 11-261541 A<br>& JP 11-261542 A       & JP 11-261543 A<br>& JP 3032510 B2        & JP 3032511 B2<br>& JP 3069331 B2        & JP 3069332 B2<br>& JP 3069333 B2        & JP 3069334 B2<br>& JP 3069335 B2        & JP 2000-307671 A<br>& JP 3363123 B2        & EP 552034 A2 | 1-13 |
| A | JP 2004-166038 A  (Matsushita Electric<br>Industrial Co., Ltd.),<br>10 June, 2004 (10.06.04),<br>Par. Nos. [0071] to [0086]; Figs. 9 to 12<br>& JP 3583414 B2        & EP 1551124 A1<br>& US 2006/0007892 A1    & CN 1692592 A<br>& WO 2004/045122 A1 | 1-13 |
| A | JP 2002-026781 A  (Lucent Technologies Inc.),<br>25 January, 2002 (25.01.02),<br>Par. Nos. [0005], [0012]; Fig. 1A<br>& AU 4622201 A         & BR 102055 A<br>& CA 2342533 A1        & CN 1327319 A<br>& KR 1109174 A         & US 6539209 B1<br>& EP 1160997 A2 | 1-13 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003516036 A

- JP 2005191481 A

**Non-patent literature cited in the description**

- **A. VAN ZELST.** Space Division Multiplexing Algorithms. *10th Mediterranean Electro technical Conf. (MELECON)2000,* May 2000, vol. 3, 1218-1221